# EUROPEAN PATENT APPLICATION

(11) **EP 4 345 934 A1**
(43) Date of publication of application: **03.04.2024**
(21) Application number: 22897826.8
(22) Date of filing: 23.11.2022
(51) Int. Cl.: H01M 4/13, H01M 4/62, H01M 10/0567

(54) **BATTERY**

(30) Priority: 23.11.2021 CN 202111396652; 23.11.2021 CN 202111394913; 23.11.2021 CN 202111396653; 23.11.2021 CN 202111396654; 23.11.2021 CN 202111396648; 23.11.2021 CN 202111394925; 23.11.2021 CN 202111396647; 23.11.2021 CN 202111394938
(71) Applicant: Zhuhai CosMX Battery Co., Ltd., Zhuhai, Guangdong 519180 (CN)
(72) Inventor: MU, Yingdi, Zhuhai, Guangdong 519180 (CN); WANG, Hai, Zhuhai, Guangdong 519180 (CN); LI, Suli, Zhuhai, Guangdong 519180 (CN)
(74) Representative: Murgitroyd & Company
(86) International application number: PCT/CN2022/133613
(87) International publication number: WO 2023/093743

(57) **Abstract**

The present disclosure belongs to the field of battery technologies, and specifically relates to a battery. The battery includes a positive electrode plate, a negative electrode plate, a non-aqueous electrolyte solution, and a separator. The non-aqueous electrolyte solution includes a non-aqueous organic solvent, a lithium salt, and an optional electrolyte additive. A termination tape of the positive electrode plate is disposed at a paste coating tail of the positive electrode plate. An area of a termination tape of the positive electrode plate is A cm², and a width of the positive electrode plate is C cm, wherein a ratio of A to C is in a range of 1 to 3. The battery can effectively improve high-temperature performance of a battery cell of the prepared battery, and can also solve a problem of lithium deposition at an edge of an electrode plate occurred after cycling of the battery cell, to avoid problems, such as thickness failure in high-temperature storage and lithium deposition in high-temperature cycling of the battery cell caused by warping and deformation of a termination tape of a positive electrode plate, an adhesive layer in the termination tape of the positive electrode plate being easily soluble in a non-aqueous electrolyte solution, and the non-aqueous electrolyte solution being easily oxidized, reduced and decomposed at positive and negative interfaces, occurred when the battery is used in a high-temperature environment.

## Description

### TECHNICAL FIELD

The present disclosure belongs to the field of battery technologies, and specifically relates to a battery.

### BACKGROUND

In recent years, batteries have been widely used in a smartphone, a tablet computer, intelligent wearing, an electric tool, an electric vehicle, and other fields. With wide application of batteries, consumers' requirements on energy density and use environment of the batteries are constantly increasing, which requires that the batteries have good high-temperature safety performance at high voltage.

Currently, there is a potential safety hazard during use of lithium-ion batteries. For example, when a battery is in some extreme use cases such as a continuous high temperature, a serious safety accident easily occurs, and a serious safety accident such as a fire or even an explosion caused by deformation of a battery cell may occur. Therefore, it is very important to improve high-temperature safety performance of a battery.

### SUMMARY

An objective of the present disclosure is to provide a new battery for improving high-temperature safety performance of a battery. The battery has excellent high-temperature safety performance, and can also display good high-temperature safety performance at high voltage.

To achieve the foregoing objective, the present disclosure provides a battery. The battery includes a positive electrode plate, a negative electrode plate, a non-aqueous electrolyte solution, and a separator. The non-aqueous electrolyte solution includes a non-aqueous organic solvent, a lithium salt, and an optional electrolyte additive. A termination tape of the positive electrode plate is disposed at a paste coating tail of the positive electrode plate. An area of a termination tape of the positive electrode plate is A cm², a width of the positive electrode plate is C cm, and a ratio of A to C is in a range of 1 to 3.

In an example, the termination tape includes a substrate and a termination adhesive layer coated on a surface of the substrate, and the termination adhesive layer is a rubber termination adhesive layer or a (meth)acrylic acid termination adhesive layer.

In an example, the termination adhesive layer includes vinylene carbonate.

In an example, using a total weight of the non-aqueous electrolyte solution as a reference, a content of the lithium salt is B1 mol/L, and a ratio of A to B1 is in a range of 2-20.

In an example, the electrolyte additive includes fluoroethylene carbonate, using a total weight of the non-aqueous electrolyte solution as a reference, a content of fluoroethylene carbonate is B2 wt%, and a ratio of A to B2 is in a range of 0.5-5.

In an example, the electrolyte additive includes lithium difluoro(oxalato)borate, using a total weight of the non-aqueous electrolyte solution as a reference, a content of lithium difluoro(oxalato)borate is B3 wt%, and a ratio of A to B3 is in a range of 5-200.

In an example, the electrolyte additive includes lithium difluorophosphate, using a total weight of the non-aqueous electrolyte solution as a reference, a content of lithium difluorophosphate is B4 wt%, and a ratio of A to B4 is in a range of 5-200.

In an example, the electrolyte additive includes 1,2-bis(cyanoethoxy)ethane and/or 1,2,3-tris(2-cyanoethoxy)propane, using a total weight of the non-aqueous electrolyte solution as a reference, a content of 1,2-bis(cyanoethoxy)ethane and/or 1,2,3-tris(2-cyanoethoxy)propane is B56 wt%, and a ratio of A to B56 is in a range of 2-40.

In an example, the electrolyte additive includes one or a combination of two or more of lithium difluoro(oxalato)borate, fluoroethylene carbonate, lithium difluorophosphate, 1,2-bis(cyanoethoxy)ethane, or 1,2,3-tris(2-cyanoethoxy)propane.

In an example, the electrolyte additive includes at least lithium difluoro(oxalato)borate.

In an example, the electrolyte additive includes at least lithium difluorophosphate.

In an example, the electrolyte additive includes at least lithium difluorophosphate.

In an example, the electrolyte additive includes at least fluoroethylene carbonate.

In an example, the electrolyte additive includes at least 1,2-bis(cyanoethoxy)ethane and/or 1,2,3-tris(2-cyanoethoxy)propane.

In an example, the battery includes at least one of the following combinations (1) to (8):
(1) using a total weight of the non-aqueous electrolyte solution as a reference, a content of the lithium salt is B1 mol/L, a ratio of A to B1 is in a range of 2-20, and a termination adhesive layer of the termination tape of the positive electrode plate is a rubber termination adhesive layer;
(2) using a total weight of the non-aqueous electrolyte solution as a reference, a content of the lithium salt is B1 mol/L, a ratio of A to B1 is in a range of 2-20, and a termination adhesive layer of the termination tape of the positive electrode plate is a (meth)acrylic acid termination adhesive layer;
(3) the electrolyte additive includes fluoroethylene carbonate, using a total weight of the non-aqueous electrolyte solution as a reference, a content of fluoroethylene carbonate is B2 wt%, a ratio of A to B2 is in a range of 0.5-5, and a termination adhesive layer of the termination tape of the positive electrode plate is a (meth)acrylic acid termination adhesive layer;
(4) the electrolyte additive includes fluoroethylene carbonate, using a total weight of the non-aqueous electrolyte solution as a reference, a content of fluoroethylene carbonate is B2 wt%, a ratio of A to B2 is in a range of 0.5-5, and a termination adhesive layer of the termination tape of the positive electrode plate is a rubber termination adhesive layer;
(5) the electrolyte additive includes lithium difluoro(oxalato)borate, using a total weight of the non-aqueous electrolyte solution as a reference, a content of lithium difluoro(oxalato)borate is B3 wt%, a ratio of A to B3 is in a range of 5-200, and a termination adhesive layer of the termination tape of the positive electrode plate is a rubber termination adhesive layer;
(6) the electrolyte additive includes lithium difluorophosphate, using a total weight of the non-aqueous electrolyte solution as a reference, a content of lithium difluorophosphate is B4 wt%, a ratio of A to B4 is in a range of 5-200, and a termination adhesive layer of the termination tape of the positive electrode plate is a (meth)acrylic acid termination adhesive layer;
(7) the electrolyte additive includes 1,2-bis(cyanoethoxy)ethane and/or 1,2,3-tris(2-cyanoethoxy)propane, using a total weight of the non-aqueous electrolyte solution as a reference, a content of 1,2-bis(cyanoethoxy)ethane and/or 1,2,3-tris(2-cyanoethoxy)propane is B56 wt%, a ratio of A to B56 is in a range of 2-40, and a termination adhesive layer of the termination tape of the positive electrode plate is a (meth)acrylic acid termination adhesive layer; or
(8) the electrolyte additive includes 1,2-bis(cyanoethoxy)ethane and/or 1,2,3-tris(2-cyanoethoxy)propane, using a total weight of the non-aqueous electrolyte solution as a reference, a content of 1,2-bis(cyanoethoxy)ethane and/or 1,2,3-tris(2-cyanoethoxy)propane is B56 wt%, a ratio of A to B56 is in a range of 2-40, and a termination adhesive layer of the termination tape of the positive electrode plate is a rubber termination adhesive layer.

A battery in the present disclosure is a high-voltage battery and has excellent high-temperature performance. A size of a termination tape of a positive electrode plate is controlled, a material of an adhesive layer is further controlled in a preferred solution, a relationship between the termination tape of the positive electrode plate and the non-aqueous electrolyte solution is optimized, and selection and a content of a specific component in the non-aqueous electrolyte solution are controlled, so that problems such as an adhesive layer in the termination tape of the positive electrode plate being easily soluble in a non-aqueous electrolyte solution, and the non-aqueous electrolyte solution being easily oxidized, reduced and decomposed at positive and negative interfaces can be effectively solved. This avoids thickness failure in high-temperature storage and lithium deposition in high-temperature cycling of the battery cell caused by warping and deformation of the termination tape of the positive electrode plate occurred when the battery is used in a high-temperature environment. Thus, high-temperature performance of a battery cell of the prepared battery can be effectively improved, and a problem of lithium deposition at an edge of an electrode plate occurred after cycling of the battery cell can also be solved.

An endpoint and any value of the ranges disclosed herein are not limited to the exact ranges or values, and these ranges or values shall be understood to include values close to these ranges or values. For a numerical range, one or more new numerical ranges may be obtained in combination with each other between endpoint values of respective ranges, between endpoint values of respective ranges and individual point values, and between individual point values, and these numerical range should be considered as specifically disclosed herein.

### BRIEF DESCRIPTION OF THE DRAWINGS

FIG. 1 is a schematic structural diagram of a positive electrode plate according to an example of the present disclosure.
FIG. 2 is a schematic structural diagram of a positive electrode plate in another example of the present disclosure.
FIG. 3 is a side view of the positive electrode plate in FIG. 2.

### Reference numerals:

1-head of a positive electrode plate; 2-tail of a positive electrode plate; 3-foil uncoating region; 4-termination tape of a positive electrode plate;
5-paste coating tail on one side of a positive electrode plate; 6-termination tape on one side of the positive electrode plate;
7-paste coating tail on the other side of the positive electrode plate; and 8-termination tape on the other side of the positive electrode plate.

### DETAILED DESCRIPTION OF THE EMBODIMENTS

The present disclosure is further described in detail below with reference to specific embodiments. It should be understood that the following embodiments are merely for the purposes of illustrating and explaining the present disclosure, and should not be construed as limiting the scope of protection of the present disclosure. Any technology implemented based on the foregoing contents of the present disclosure falls within the intended scope of protection of the present disclosure.

A first aspect of the present disclosure provides a battery, where the battery includes a positive electrode plate, a negative electrode plate, a non-aqueous electrolyte solution, and a separator. The non-aqueous electrolyte solution includes a non-aqueous organic solvent, a lithium salt, and an optional electrolyte additive. A termination tape of the positive electrode plate is disposed at a paste coating tail of the positive electrode plate. An area of a termination tape of the positive electrode plate is A cm², a width of the positive electrode plate is C cm, and a ratio of A to C is in a range of 1 to 3.

### termination tape of a positive electrode plate >

A termination tape of a positive electrode plate is disposed at a paste coating tail of the positive electrode plate, so that a tail of a battery cell can be fixed, and burrs on a cut edge of the positive electrode plate can be covered, so as to prevent a battery from being short-circuited, thereby providing insulation protection. However, the applicant found that local deformation and warping easily occur on the termination tape at high temperature and high pressure. When the deformation and warping uplift to a specific extent, a short-circuit risk may occur. In this way, the applicant makes an in-depth study on a size of the termination tape, and finds that when a ratio of an area of the termination tape to a width of the positive electrode plate is in a range of 1 to 3, the termination tape can cover surfaces of paste and foil uncoating surfaces more properly, and control the short-circuit risk caused by deformation and warping to a low degree.

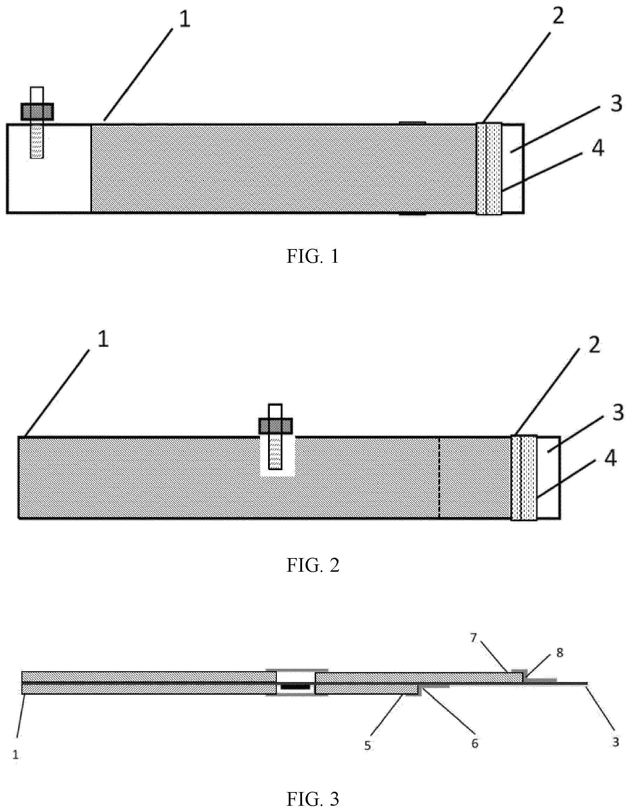

In the present disclosure, the term "termination tape of a positive electrode plate" refers to an adhesive tape on the tail of a paste (such as a positive electrode active material layer) provided on a surface of a positive electrode current collector in a positive electrode plate. As shown in the accompanying drawings, FIG. 1 and FIG. 2 respectively show structural diagrams of positive electrode plates in two examples (positions of a tab are different), where 1 denotes a head of the positive electrode plate; 2 denotes a tail of the positive electrode plate; and 3 denotes a foil uncoating region. In a battery, there are two termination tapes of a positive electrode plate, that is, a plate termination tape of the positive electrode plate is provided on both side surfaces of a positive electrode current collector in the positive electrode plate. As shown in FIG. 3, 5 denotes a paste coating tail on one side of a positive electrode plate; 6 denotes a termination tape on one side of the positive electrode plate; 7 denotes a paste coating tail on the other side of the positive electrode plate; and 8 denotes a termination tape on the other side of the positive electrode plate. It may be learned from FIG. 3, a part of each of the plate termination tapes 6 and 8 of the positive electrode plate covers pastes 5 and 7 on surfaces of the positive electrode current collector, respectively, and the other part covers surfaces of the positive electrode current collector (namely, a foil uncoating region 3 on the surfaces of the positive electrode current collector). The termination tape 4, 6, or 8 of the positive electrode plate covers both a part of a paste and a part of a foil uncoating region. As shown in FIG. 1, there is a vertical line in the middle of the termination tape 4 of the positive electrode plate (the vertical line is a crease, generated by an intersection of the paste and the foil uncoating region, of the termination tape of the positive electrode plate). A region on the left side of the vertical line is covered by the paste (a part of tail 2 of the positive electrode plate is covered), and a region on the right side of the vertical line is covered by the foil uncoating region.

An area A of the termination tape of the positive electrode plate is an area of a termination tape of the positive electrode plate disposed on one side surface of a positive electrode current collector of the positive electrode plate. In an example, termination tapes of the positive electrode plate provided on two side surfaces of the positive electrode current collector in the positive electrode plate have a same area.

For example, a ratio of A to C is 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, or a point value in a range formed by any two of the foregoing values.

In an example, the ratio of A to C is in a range of 1.6-2.2.

The area A of the termination tape of the positive electrode plate may be adjusted depending on a size of the positive electrode plate, an actual requirement, and the ratio of A to C, for example, may be in a range of 3-120 cm². For example, the area A of the termination tape of the positive electrode plate is 3 cm², 5 cm², 10 cm², 20 cm², 30 cm², 40 cm², 50 cm², 60 cm², 70 cm², 80 cm², 90 cm², 100 cm², 120 cm², or a point value in a range formed by any two of the foregoing values.

The width C of the positive electrode plate may be adjusted depending on a battery size, an actual requirement, and the ratio of A to C, for example, be in a range of 1-120 cm. For example, the width C of the positive electrode plate is 1 cm, 3 cm, 5 cm, 6 cm, 8 cm, 10 cm, 16 cm, 20 cm, 30 cm, 40 cm, 50 cm, 60 cm, 70 cm, 80 cm, 90 cm, 100 cm, 110 cm, 120 cm, or a point value in a range formed by any two of the foregoing values.

The applicant found that an important reason for occurrence of local deformation and warping of a termination tape is that an adhesive layer is easily dissolved in an electrolyte solution at high temperature and high pressure. Therefore, to reduce impact of the electrolyte solution on the termination tape, and to further reduce a risk of short-circuit caused by deformation and warping of the termination tape, the applicant makes an in-depth study on a material of the adhesive layer of the termination tape.

In an example, the termination tape includes a substrate and a termination adhesive layer coated on a surface of the substrate.

The substrate may be a conventional substrate used as a termination tape in the art, for example, PET (Polyethylene terephthalate).

In an example, the termination adhesive layer uses a conventional material in the art.

In a preferred example, the termination adhesive layer is a rubber termination adhesive layer and/or a (meth)acrylic acid termination adhesive layer.

In an X1^{th} implementation, the termination adhesive layer is a rubber termination adhesive layer.

In the X1^{th} implementation, the rubber termination adhesive layer includes a cross-linked modified rubber.

The cross-linked modified rubber is obtained by cross-linking modification of a first base under an action of a first cross-linking agent, and the first base is a rubber base, for example, is selected from at least one of a natural rubber, styrene-butadiene rubber, polyisobutylene rubber, butyl rubber, or nitrile rubber.

In an example, the first cross-linking agent includes vinylene carbonate. Vinylene carbonate can participate in cross-linking polymerization of rubber, so as to prevent cracking, so that the rubber termination adhesive layer is more resistant to high temperature and high pressure, stabilizing an adhesive layer structure, and further improving high temperature performance of a battery cell.

In an example, using a total weight of the cross-linked modified rubber as a reference, a content of vinylene carbonate ranges from 0.5 wt% to 5 wt%, for example, is 0.5 wt%, 0.6 wt%, 0.7 wt%, 0.8 wt%, 0.9 wt%, 1 wt%, 1.2 wt%, 1.5 wt%, 1.8 wt%, 2 wt%, 2.5 wt%, 3 wt%, 3.5 wt%, 3.8 wt%, 4 wt%, 4.5 wt%, or 5 wt%.

In an X2^{th} implementation, the termination adhesive layer is a (meth)acrylic acid termination adhesive layer.

In the X2^{th} implementation, the (meth)acrylic acid termination adhesive layer includes cross-linked modified (meth)acrylic acid and/or cross-linked modified (meth)acrylate.

In an example, the (meth)acrylate is selected from C1-C10 alkyl (meth)acrylates, for example, is selected from at least one of isooctyl acrylate, n-butyl acrylate, methyl acrylate, ethyl acrylate, n-propyl acrylate, or the like.

In the present disclosure, "(meth)" in "(meth)acrylic acid" and "(meth)acrylate" means that it may or may not be present, that is, the (meth)acrylic acid termination adhesive layer includes at least one of cross-linked modified methacrylic acid, cross-linked modified acrylic acid, cross-linked modified methacrylate, or cross-linked modified acrylate.

The (meth)acrylic acid termination adhesive layer is obtained by cross-linking modification of a second base under an action of a second cross-linking agent, and the second base is selected from at least one of methacrylic acid, acrylic acid, methacrylate, or acrylate.

In an example, the second cross-linking agent includes vinylene carbonate. Vinylene carbonate can participate in cross-linking polymerization of acrylic acid, so that an acrylic acid termination adhesive layer includes an ethyl carbonate structure chain, making the acrylic acid termination adhesive layer more resistant to high temperature and high pressure, stabilizing an adhesive layer structure, and further improving high temperature performance of a battery cell.

In an example, using a total weight of the cross-linked modified (meth)acrylic acid and/or cross-linked modified (meth)acrylate as a reference, a content of vinylene carbonate ranges from 0.5 wt% to 5 wt%, for example, is 0.5 wt%, 0.6 wt%, 0.7 wt%, 0.8 wt%, 0.9 wt%, 1 wt%, 1.2 wt%, 1.5 wt%, 1.8 wt%, 2 wt%, 2.5 wt%, 3 wt%, 3.5 wt%, 3.8 wt%, 4 wt%, 4.5 wt%, or 5 wt%.

In the X1^{th} and X2^{th} implementations, the termination adhesive layer may further include another conventional component such as an auxiliary agent. The auxiliary agent is, for example, selected from at least one of an antioxidant, an inorganic filler, or the like.

The antioxidant may be a conventional antioxidant suitable for a principal component (for example, a cross-linked modified rubber, or cross-linked modified (meth)acrylic acid and/or cross-linked modified (meth)acrylate).

The inorganic filler may be a conventional inorganic filler suitable for a primary component.

In an X0^{th} implementation, the termination adhesive layer includes neither a cross-linked modified rubber nor cross-linked modified (meth)acrylic acid and/or cross-linked modified (meth)acrylate, but is another conventional termination adhesive layer material in the art.

In an example, a thickness of the positive electrode plate termination tape ranges from 8 µm to 20 µm, for example, is 8 µm, 9 µm, 10 µm, 11 µm, 12 µm, 13 µm, 14 µm, 15 µm, 16 µm, 17 µm, 18 µm, 19 µm, or 20 µm.

### <Lithium salt in an electrolyte solution>

The applicant also found that an electrolyte solution is also an important factor that affects safety performance of a battery at high temperature and high pressure. A possible reason is that in a conventional technology, the electrolyte solution is easily decomposed at high temperature and high pressure, and redox decomposition occurs on surfaces of positive and negative electrodes to destroy an SEI film, causing impedance of a battery cell to continuously increase, and deteriorating cell performance. Therefore, the applicant makes an in-depth study on a composition of the electrolyte solution.

The non-aqueous electrolyte solution includes a non-aqueous organic solvent, a lithium salt, and an optional electrolyte additive. The applicant found that performance of the non-aqueous electrolyte solution can be more stable at high temperature and high pressure by controlling a content of a lithium salt and/or by using an electrolyte additive with a specific content and composition.

In a Y1^{th} implementation, a concentration of the lithium salt is specially controlled. Using a total weight of the non-aqueous electrolyte solution as a reference, a content of the lithium salt is denoted as B1 mol/L.

In an example, a ratio of A to B1 is in a range of 2-20. For example, the ratio of A to B1 is 2, 3, 4, 5, 6, 7, 8, 9, 10, 11, 12, 13, 14, 15, 16, 17, 18, 19, 20, or a point value in a range formed by any two of the foregoing values.

In the present disclosure, "in a range of a-b" represents that two endpoint values and any value between a and b are included.

In an example, the content B1 of the lithium salt ranges from 1 mol/L to 6 mol/L, for example, is 1 mol/L, 1.5 mol/L, 2 mol/L, 2.5 mol/L, 3 mol/L, 3.5 mol/L, 4 mol/L, 5 mol/L, or 6 mol/L.

In an example, the concentration B1 of the lithium salt ranges from 1.5 mol/L to 3 mol/L. The concentration of the lithium salt in the present disclosure is higher than a lithium salt concentration commonly used in a conventional technology (usually 1.2 mol/L or less).

Preferably, the lithium salt is selected from at least one of lithium bis(trifluoromethanesulfonyl)imide, lithium bis(fluorosulfonyl)imide, or lithium hexafluorophosphate.

In the present disclosure, "optional" means that it may or may not exist. For example, "optional electrolyte additive" means that the non-aqueous electrolyte solution may include an electrolyte additive or may not include an electrolyte additive.

In an example, the non-aqueous electrolyte solution does not include the electrolyte additive.

In an example, the non-aqueous electrolyte solution includes the electrolyte additive.

### <Electrolyte additive in an electrolyte solution>

In a Y2^{th} implementation, the electrolyte additive includes fluoroethylene carbonate. Using a total weight of the non-aqueous electrolyte solution as a reference, a content of fluoroethylene carbonate is denoted as B2 wt%.

In an example, a ratio of A to B2 is in a range of 0.5-5. For example, the ratio of A to B2 is 0.5, 0.8, 1, 1.2, 1.4, 1.5, 1.8, 2, 2.2, 2.5, 2.8, 3, 3.2, 3.5, 3.8, 4, 4.5, 5, or a point value in a range formed by any two of the foregoing values.

In an example, the content B2 of fluoroethylene carbonate ranges from 5 wt% to 30 wt%, and for example, is 5 wt%, 6 wt%, 7 wt%, 8 wt%, 9 wt%, 10 wt%, 12 wt%, 15 wt%, 18 wt%, 20 wt%, 22 wt%, 25 wt%, 28 wt%, or 30 wt%.

In an example, the content of fluoroethylene carbonate ranges from 5 wt% to 10 wt%.

In a Y3^{th} implementation, the electrolyte additive includes lithium difluoro(oxalato)borate. Using a total weight of the non-aqueous electrolyte solution as a reference, the content of lithium difluoro(oxalato)borate is denoted as B3 wt%.

In an example, a ratio of A to B3 is in a range of 5-200. For example, the ratio of A to B3 is 5, 10, 15, 20, 25, 30, 40, 50, 60, 80, 100, 120, 150, 180, 200, or a point value in a range formed by any two of the foregoing values.

In an example, the content B3 of lithium difluoro(oxalato)borate ranges from 0.1 wt% to 3 wt%, and for example, is 0.1 wt%, 0.2 wt%, 0.3 wt%, 0.4 wt%, 0.5 wt%, 0.6 wt%, 0.7 wt%, 0.8 wt%, 0.9 wt%, 1 wt%, 1.2 wt%, 1.5 wt%, 1.8 wt%, 2 wt%, 2.2 wt%, 2.5 wt%, 2.8 wt%, or 3 wt%.

In an example, the content B3 of difluoro(oxalato)borate ranges from 0.2 wt% to 1 wt%.

In a Y4^{th} implementation, the electrolyte additive includes lithium difluorophosphate. Using a total weight of the non-aqueous electrolyte solution as a reference, a content of lithium difluorophosphate is denoted as B4 wt%.

In an example, a ratio of A to B4 is in a range of 5-200. For example, the ratio of A to B4 is 5, 10, 15, 20, 25, 30, 40, 50, 60, 80, 100, 120, 150, 180, 200, or a point value in a range formed by any two of the foregoing values.

In an example, the content B4 of lithium difluorophosphate ranges from 0.1 wt% to 3 wt%, for example, is 0.1 wt%, 0.2 wt%, 0.3 wt%, 0.4 wt%, 0.5 wt%, 0.6 wt%, 0.7 wt%, 0.8 wt%, 0.9 wt%, 1 wt%, 1.2 wt%, 1.5 wt%, 1.8 wt%, 2 wt%, 2.2 wt%, 2.5 wt%, 2.8 wt%, or 3 wt%.

In an example, the content B4 of lithium difluorophosphate ranges from 0.2 wt% to 1 wt%.

In a Y5^{th} implementation, the electrolyte additive includes 1,2-bis(cyanoethoxy)ethane. Using a total weight of the non-aqueous electrolyte solution as a reference, a content of 1,2-bis(cyanoethoxy)ethane is denoted as B5 wt%.

In an example, a ratio of A to B5 is in a range of 2-40. For example, the ratio of A to B5 is 2, 3, 4, 5, 6, 7, 8, 9, 10, 15, 20, 25, 30, 35, 40, or a point value in a range formed by any two of the foregoing values.

In an example, the content B5 of 1,2-bis(cyanoethoxy)ethane ranges from 0.5 wt% to 3 wt%, for example, is 0.5 wt%, 0.6 wt%, 0.7 wt%, 0.8 wt%, 0.9 wt%, 1 wt%, 1.2 wt%, 1.5 wt%, 1.8 wt%, 2 wt%, 2.2 wt%, 2.5 wt%, 2.8 wt%, or 3 wt%.

In an example, the content B5 of 1,2-bis(cyanoethoxy)ethane ranges from 1 wt% to 2 wt%.

In a Y6^{th} implementation, the electrolyte additive includes 1,2,3-tris(2-cyanoethoxy) propane. Using a total weight of the non-aqueous electrolyte solution as a reference, a content of 1,2,3-tris(2-cyanoethoxy)propane is denoted as B6 wt%.

In an example, a ratio of A to B6 is in a range of 2-40. For example, the ratio of A to B6 is 2, 3, 4, 5, 6, 7, 8, 9, 10, 15, 20, 25, 30, 35, 40, or a point value in a range formed by any two of the foregoing values.

In an example, the content B6 of 1,2,3-tris(2-cyanoethoxy)propane ranges from 0.5 wt% to 3 wt%, for example, is 0.5 wt%, 0.6 wt%, 0.7 wt%, 0.8 wt%, 0.9 wt%, 1 wt%, 1.2 wt%, 1.5 wt%, 1.8 wt%, 2 wt%, 2.2 wt%, 2.5 wt%, 2.8 wt%, or 3 wt%.

In an example, the content B6 of 1,2,3-tris(2-cyanoethoxy)propane ranges from 1 wt% to 2 wt%.

In addition to main components defined in foregoing Y2^{th}-Y6^{th} specific implementations, the electrolyte additive may further include another component, which is, for example, selected from at least one of 1,3-propanesulfonic acid lactone, 1-propene 1,3-sultone, ethylene sulphite, ethylene sulfate, lithium bis(oxalate)borate, lithium difluoro oxalate phosphate, or vinyl ethylene carbonate.

In an example, using a total weight of the non-aqueous electrolyte solution as a reference, a total content of the electrolyte additive ranges from 0 wt% to 10 wt%, for example, is 1 wt%, 2 wt%, 3 wt%, 4 wt%, 5 wt%, 6 wt%, 7 wt%, 8 wt%, 9wt%, or 10 wt%. When the content is 0 wt%, it indicates that the non-aqueous electrolyte solution does not include the electrolyte additive.

### < Combination of components in an electrolyte solution>

According to the present disclosure, various implementations of the lithium salt and the electrolyte additive in the non-aqueous electrolyte solution may be combined in any manner. In the present disclosure, the foregoing exemplified Y1^{th} implementation (defining a lithium salt) and Y2^{th}-Y6^{th} implementations (defining an electrolyte additive) may be combined in any manner, and optionally, another electrolyte additive is added or not added.

Various combinations may be performed between components of the electrolyte additive. When a condition that a total weight of the electrolyte additive accounting for a content of the non-aqueous electrolyte solution is in a range is met, all combination manners can achieve better effect.

According to a specific implementation, the Y5^{th} and the Y6^{th} are used as a new combination, which is denoted as Y56.

In a Y56^{th} implementation, the electrolyte additive includes 1,2-bis(cyanoethoxy)ethane and/or 1,2,3-tris(2-cyanoethoxy)propane. That is, the Y56^{th} implementation includes the Y5^{th} implementation and the Y6^{th} implementation, and further includes an implementation in which the Y5^{th} and the Y6^{th} are combined.

In the Y56^{th} implementation, when only 1,2-bis(cyanoethoxy)ethane or 1,2,3-tris(2-cyanoethoxy)propane exist, the implementation is the Y5^{th} implementation or the Y6^{th} implementation, and details are not described herein again.

In the Y56^{th} implementation, when both 1,2-bis(cyanoethoxy)ethane and 1,2,3-tris(2-cyanoethoxy)propane exist, a content of 1,2-bis(cyanoethoxy)ethane and 1,2,3-tris(2-cyanoethoxy)propane is denoted as B56 wt% by using a total weight of the non-aqueous electrolyte solution as a reference.

In an example, a ratio of A to B56 is in a range of 2-40. For example, the ratio of A to B56 is 2, 3, 4, 5, 6, 7, 8, 9, 10, 15, 20, 25, 30, 35, 40, or a point value in a range formed by any two of the foregoing values.

In an example, the total content B56 of 1,2-bis(cyanoethoxy)ethane and 1,2,3-tris(2-cyanoethoxy)propane ranges from 0.5 wt% to 3 wt%, for example, is 0.5 wt%, 0.6 wt%, 0.7 wt%, 0.8 wt%, 0.9 wt%, 1 wt%, 1.2 wt%, 1.5 wt%, 1.8 wt%, 2 wt%, 2.2 wt%, 2.5 wt%, 2.8 wt%, or 3 wt%.

In an example, the total content B56 of 1,2-bis(cyanoethoxy)ethane and 1,2,3-tris(2-cyanoethoxy)propane ranges from 1 wt% to 2 wt%.

In the present disclosure, "ratio" generally refers to a proportion calculated by using a numerical portion of two parameters.

In an example, the electrolyte additive includes at least lithium difluoro(oxalato)borate.

In an example, the electrolyte additive includes at least lithium difluorophosphate.

In an example, the electrolyte additive includes at least lithium difluorophosphate.

In an example, the electrolyte additive includes at least fluoroethylene carbonate.

In an example, the electrolyte additive includes at least 1,2-bis(cyanoethoxy)ethane and/or 1,2,3-tris(2-cyanoethoxy)propane.

In an example, the electrolyte additive includes a combination of Y2 and Y3.

In an example, the electrolyte additive includes a combination of Y2 and Y4.

In an example, the electrolyte additive includes a combination of Y2 and Y56.

In an example, the electrolyte additive includes a combination of Y3 and Y4.

In an example, the electrolyte additive includes a combination of Y3 and Y56.

In an example, the electrolyte additive includes a combination of Y4 and Y56.

In an example, the electrolyte additive includes a combination of Y2, Y3, and Y4.

In an example, the electrolyte additive includes a combination of Y2, Y3, and Y56.

In an example, the electrolyte additive includes a combination of Y2, Y4, and Y56.

In an example, the electrolyte additive includes a combination of Y3, Y4, and Y56.

In an example, the electrolyte additive includes a combination of Y2, Y3, Y4, and Y56.

The non-aqueous electrolyte solution necessarily include the lithium salt, and optionally includes the electrolyte additive.

According to an implementation, the non-aqueous electrolyte solution may include only Y1.

According to another implementation, the non-aqueous electrolyte solution may include only the Y2-Y6 and a combination thereof (that is, a content of the lithium salt may not be in the range defined in Y1).

According to yet another implementation, the non-aqueous electrolyte solution may include Y1 and Y2-Y6 and an internal combination thereof.

In an example, the non-aqueous electrolyte solution includes a combination of Y1 and Y2.

In an example, the non-aqueous electrolyte solution includes a combination of Y1 and Y3.

In an example, the non-aqueous electrolyte solution includes a combination of Y1 and Y4.

In an example, the non-aqueous electrolyte solution includes a combination of Y1 and Y56.

In an example, the non-aqueous electrolyte solution includes Y1 and a combination of Y2 and Y3.

In an example, the non-aqueous electrolyte solution includes Y1 and a combination of Y2 and Y4.

In an example, the non-aqueous electrolyte solution includes Y1 and a combination of Y2 and Y56.

In an example, the non-aqueous electrolyte solution includes Y1 and a combination of Y3 and Y4.

In an example, the non-aqueous electrolyte solution includes Y1 and a combination of Y3 and Y56.

In an example, the non-aqueous electrolyte solution includes Y1 and a combination of Y4 and Y56.

In an example, the non-aqueous electrolyte solution includes Y1 and a combination of Y2, Y3, and Y4.

In an example, the non-aqueous electrolyte solution includes Y1 and a combination of Y2, Y3, and Y56.

In an example, the non-aqueous electrolyte solution includes Y1 and a combination of Y2, Y4, and Y56.

In an example, the non-aqueous electrolyte solution includes Y1 and a combination of Y3, Y4, and Y56.

In an example, the non-aqueous electrolyte solution includes Y1 and a combination of Y2, Y3, Y4, and Y56.

Existence of another electrolyte additive is not limited in the foregoing combination manners.

The non-aqueous electrolyte solution further includes a non-aqueous organic solvent, and the non-aqueous organic solvent may be a conventional organic solvent in the art, for example, may be at least one of a carbonate, a carboxylic acid ester, or a fluorinated ether. The carbonate is, for example, selected from one or more combinations of ethylene carbonate, propylene carbonate, dimethyl carbonate, ethyl methyl carbonate, diethyl carbonate, or methyl propyl carbonate. The carboxylic acid ester is, for example, selected from one or more combinations of ethyl propionate or propyl propionate. The fluorinated ether, for example, is selected from 1,1,2,3-tetrafluoroethyl-2,2,3,3-tetrafluoropropyl ether.

In an example, the non-aqueous organic solvent includes a combination of ethylene carbonate (EC), propylene carbonate (PC), propyl propionate (PP), 1,1,2,3-tetrafluoroethyl-2,2,3,3-tetrafluoropropyl ether in a weight ratio of (1-3):(0.5-2):(2-4):(1-3).

### <Combination of an electrolyte solution and a termination tape of a positive electrode>

According to the present disclosure, a short-circuit risk caused by deformation and warping of a termination tape can be reduced by specially limiting a size of the termination tape of a positive electrode plate. In a preferred solution, a material of a termination adhesive layer on the termination tape of the positive electrode plate is further limited, so that a phenomenon that the adhesive layer is easily dissolved in an electrolyte solution at high temperature and high pressure can be further reduced, thereby further reducing a short-circuit risk caused by deformation and warping of the termination tape.

In a case in which the limitation on the termination tape of the positive electrode is met, even if the foregoing Y1-Y6 may not be further met, better effect can be achieved.

In a preferred solution, a limitation on the electrolyte solution in Y1-Y6 can have synergistic effect with a limitation on the termination tape of the positive electrode plate described above (in particular, a limitation on the material of the termination adhesive layer), so that high-temperature performance of a battery cell of the prepared battery can be effectively improved, and a problem of lithium deposition at an edge of an electrode plate occurred after cycling of the battery cell can also be solved. This avoids problems, such as thickness failure in high-temperature storage and lithium deposition in high-temperature cycling of the battery cell caused by warping and deformation of the termination tape of the positive electrode plate, the adhesive layer in the termination tape of the positive electrode plate being easily soluble in a non-aqueous electrolyte solution, and the non-aqueous electrolyte solution being easily oxidized, reduced and decomposed at positive and negative interfaces, occurred when the battery is used in a high-temperature environment.

Therefore, in a preferred solution, one or more combinations of Y1-Y6 are further combined with X1 and/or X2.

In an example, the battery includes a combination of X1 and Y1.

In an example, the battery includes a combination of X2 and Y1.

When the non-aqueous electrolyte solution includes a high concentration of solute lithium salt, the high concentration of solute lithium salt is more conducive to enhancing an interaction between a solute and a solvent in the solution, and free solvent molecules disappear, forming a new non-aqueous electrolyte solution, that is, a high concentration of non-aqueous electrolyte solution, which is more conducive to forming a specific three-dimensional network structure of the non-aqueous electrolyte solution in a current proportion. Ions (such as lithium ions) coordinate with limited free solvent molecules and anions, which is significantly different from a conventional low-concentration electrolyte solution with free solvent molecules as a main body, and may better slow down aging of an adhesive layer in a termination tape of a positive electrode plate after the termination tape of the positive electrode plate is soaked in the non-aqueous electrolyte solution, so that the adhesive layer still maintains a good multi-flex resistance and binding force. This ensures that the adhesive layer still maintains tensile strength after being soaked in the non-aqueous electrolyte solution, delays aging and failure of the termination tape of the positive electrode plate, prevents the adhesive layer from overflowing the termination tape of the positive electrode plate and covering a surface of a positive electrode active material to cause hole plugging, improves deformation of a battery cell due to warping of the termination tape of the positive electrode plate, and also solves problems such as lithium deposition at an edge caused by the hole plugging during cycling of the battery cell. Further, as a concentration of the lithium salt increases, a working voltage range of the non-aqueous electrolyte solution becomes wider, a high-voltage positive electrode material is matched to implement stable charging and discharging, and combustible solvent molecules are less, so that a reaction between the electrolyte solution and active oxygen generated from the positive electrode may be alleviated, and a service life and safety of the battery may be improved.

In an example, the battery includes a combination of X1 and Y2.

In an example, the battery includes a combination of X2 and Y2.

When the non-aqueous electrolyte solution includes fluoroethylene carbonate, fluoroethylene carbonate can have good synergistic effect with the termination tape of the positive electrode plate. Specifically, fluoroethylene carbonate is a carbonate compound with high viscosity, large intermolecular dipole moment, and strong polarity, and has poor compatibility with the termination adhesive layer in the termination tape of the positive electrode plate. When a ratio of A to B2 is in a range of 0. 5-5, an intermolecular force of the termination adhesive layer may be strengthened after the termination tape of the positive electrode plate is soaked in the non-aqueous electrolyte solution, to suppress flow and dispersion of the termination adhesive layer when the termination adhesive layer is soaked in the non-aqueous electrolyte solution, so that the termination adhesive layer maintains good viscosity. This delays aging and failure of the termination tape of the positive electrode plate, prevents the termination adhesive layer from overflowing the termination tape of the positive electrode plate and covering a surface of a positive electrode active material to cause hole plugging, improves deformation of a battery cell due to warping of the termination tape of the positive electrode plate occurred after high-temperature storage of the battery cell, and also solves problems such as lithium deposition at an edge caused by the hole plugging during cycling of the battery cell. In addition, fluoroethylene carbonate may form a relatively strong SEI film on surfaces of positive and negative electrodes, stabilizing positive and negative electrode interfaces at high temperature and high pressure, reducing side reactions and generation of hydrofluoric acid, and avoiding corrosion and damage of the hydrofluoric acid to the termination adhesive layer. This further slows down aging and failure of the termination adhesive layer after the termination tape of the positive electrode plate is soaked in the non-aqueous electrolyte solution, prevents the termination adhesive layer from overflowing the termination tape of the positive electrode plate and covering a surface of a positive electrode active material to cause hole plugging, improves deformation of a battery cell due to warping of the termination tape of the positive electrode plate occurred after high-temperature storage of the battery cell, and also solves problems such as lithium deposition at an edge caused by the hole plugging during cycling of the battery cell.

In an example, the battery includes a combination of X1 and Y3.

In an example, the battery includes a combination of X2 and Y3.

When the non-aqueous electrolyte solution includes lithium difluoro(oxalato)borate, lithium difluoro(oxalato)borate can adsorb and complex small molecule substances (such as Cl, SO₄²⁻, HF, and H₂O) in the non-aqueous electrolyte solution, so as to slow down aging of an adhesive layer in the termination tape of the positive electrode plate soaked in the non-aqueous electrolyte solution, so that the adhesive layer still maintains a good multi-flex resistance and binding force. This ensures that the adhesive layer still maintains tensile strength after being soaked in the non-aqueous electrolyte solution, and keeps the adhesive layer stable and reduces flow of the adhesive layer. Lithium difluoro(oxalato)borate may also enhance protective effect on precipitation of a positive electrode active material (a metal such as cobalt) while adsorbing and complexing small molecules in the non-aqueous electrolyte solution. This delays aging and failure of the termination tape of the positive electrode plate in high temperature, prevents the termination adhesive layer from overflowing the termination tape of the positive electrode plate and covering a surface of a positive electrode active material to cause hole plugging, improves deformation of a battery cell due to warping of the termination tape of the positive electrode plate occurred after high-temperature storage of the battery cell, and also solves problems such as lithium deposition at an edge caused by the hole plugging during cycling of the battery cell. Further, lithium difluoro(oxalato)borate in the non-aqueous electrolyte solution may further form a solid electrode/electrolyte interface film on the positive and negative electrode surfaces, so as to optimize intercalation/deintercalation of ions on the positive and negative electrode surfaces, thereby improving cycling performance of the battery.

In an example, the battery includes a combination of X1 and Y4.

In an example, the battery includes a combination of X2 and Y4.

When the non-aqueous electrolyte solution includes lithium difluorophosphate, lithium difluorophosphate can have better synergistic effect with the termination tape of the positive electrode plate. Specifically, lithium difluorophosphate can adsorb and complex more small molecule substances (such as Cl, SO₄²⁻, HF, and H₂O) in the non-aqueous electrolyte solution, to inhibit hydrolysis of an acrylic acid termination adhesive layer in the termination tape of the positive electrode plate after the termination tape of the positive electrode plate is soaked in the non-aqueous electrolyte solution, thereby effectively increasing stability of a macromolecular cross-linked structure in the acrylic acid termination adhesive layer, strengthening a molecular structure of the acrylic acid termination adhesive layer, and making the acrylic acid termination adhesive layer maintain good viscosity and reducing liquefaction and flow. This delays aging and failure of the termination tape of the positive electrode plate in high temperature, prevents the acrylic acid termination adhesive layer from overflowing the termination tape of the positive electrode plate and covering a surface of a positive electrode active material to cause hole plugging, improves deformation of a battery cell due to warping of the termination tape of the positive electrode plate occurred after high-temperature storage of the battery cell, and also solves problems such as lithium deposition at an edge caused by the hole plugging during cycling of the battery cell. Further, the lithium difluorophosphate in the non-aqueous electrolyte solution is combined with proton acid in the non-aqueous electrolyte solution, so that not only corrosion and damage of the proton acid to the acrylic acid termination adhesive layer are avoided, but also impact of the proton acid on an electrode material may be avoided, and an excellent electrode/electrolyte interface film is formed on the positive and negative electrodes, optimizing intercalation/deintercalation of ions (such as lithium ions) on the electrode surfaces, and improving cycling performance of a secondary lithium-ion battery.

In an example, the battery includes a combination of X1 and Y56.

In an example, the battery includes a combination of X2 and Y56.

When the non-aqueous electrolyte solution includes 1,2-bis(cyanoethoxy)ethane and/or 1,2,3-tris(2-cyanoethoxy)propane, 1,2-bis(cyanoethoxy)ethane and/or 1,2,3-tris(2-cyanoethoxy)propane can react at a high temperature, and an ether bond is broken to generate (CH₂)₂CN free radical, which is relatively stable under impact of a cyano group and a chain reaction of free radical may be more fully triggered. After the termination tape of the positive electrode plate is soaked in the electrolyte solution, some macromonomers in the adhesive layer may be further cross-linked and polymerized, so that a molecular chain breakage of a cross-linking body in the termination adhesive layer at a high temperature can be inhibited, stability of a macro cross-linked structure of the adhesive layer can be effectively enhanced, and a molecular structure of the adhesive layer may be strengthened. This delays aging and failure of the termination tape of the positive electrode plate, prevents the termination adhesive layer from overflowing the termination tape of the positive electrode plate and covering a surface of a positive electrode active material to cause hole plugging, improves deformation of a battery cell due to warping of the termination tape of the positive electrode plate, and also solves problems such as lithium deposition at an edge caused by the hole plugging during cycling of the battery cell. Further, a group including N in 1,2-bis(cyanoethoxy)ethane and/or 1,2,3-tris(2-cyanoethoxy)propane in the non-aqueous electrolyte solution may be combined with a proton acid in the electrolyte, so that not only corrosion and damage of the proton acid to the termination adhesive layer are avoided, but also impact of the proton acid on an electrode material may be avoided, and an excellent electrode/electrolyte interface film is formed on a positive electrode, optimizing intercalation/deintercalation of ions (such as lithium ions) on the electrode surface, and improving cycling performance of a battery.

According to an implementation, the battery includes a combination of two or more of X1 and/or X2 and Y1-Y6 (see combination examples listed above).

### <Other parts of a battery>

Other components and elements of the battery may be disposed in a conventional manner in the art.

In an example, the positive electrode plate includes a positive electrode current collector and a positive electrode active material layer coated on a surface of either or both sides of the positive electrode current collector. The positive electrode active material layer includes a positive electrode active material, a conductive agent, and a binder.

The positive electrode active material is selected from lithium cobalt oxide or lithium cobalt oxide doped and coated with two or more elements in Al, Mg, Mn, Cr, Ti, and Zr. A chemical formula of the lithium cobalt oxide doped and coated with the two or more elements in Mg, Mn, Cr, Ti, and Zr is LiₓCo_{1-y1-y2-y3-y4}A_{y1}B_{y2}C_{y3}D_{y4}O₂, where 0.95 ≤ x ≤ 1.05, 0.01 ≤ y1 ≤ 0.1, 0.01 ≤ y2 ≤ 0.1, 0 ≤ y3 ≤ 0.1, 0 ≤ y4 ≤ 0.1, and A, B, C, and D are selected from the two or more elements in Al, Mg, Mn, Cr, Ti, and Zr.

In an example, a negative electrode plate includes a negative electrode current collector and a negative electrode active material layer coated on a surface of either or both sides of the negative electrode current collector, and the negative electrode active material layer includes a negative electrode active material, a conductive agent, and a binder.

In an example, the negative electrode active material is selected from graphite or a graphite composite material including 1-12 wt% SiOₓ/C or Si/C.

In an example, a charge cut-off voltage of the battery is 4.45V or above.

In an example, the battery is a lithium-ion battery.

### <Example>

Experimental methods used in the following examples are conventional methods, unless otherwise specified. Reagents, materials, and the like used in the following examples are all commercially available, unless otherwise specified.

In the following examples and comparative examples, components of a lithium-ion battery are prepared and assembled in a manner in the following preparation example, unless otherwise specified.

### Preparation Example

### (1) Preparation of a positive electrode plate

A positive electrode active material LiCoO₂, a binder polyvinylidene fluoride (PVDF), and a conductive agent acetylene black were mixed at a weight ratio of 97.2: 1.3: 1.5, added with N-methylpyrrolidone (NMP). The mixture was stirred under action of a vacuum blender until a mixed system became a positive electrode slurry with uniform fluidity. The positive electrode slurry was evenly applied on aluminum foil having a thickness ranging from 9 µm to 12 µm. The coated aluminum foil was baked in a five-stage oven with different temperatures and then dried in an oven at 120°C for 8 hours, followed by rolling and cutting, to obtain required positive electrode plates with different sizes. For specific widths of electrode plates, see each group of examples.

### (2) Preparation of a termination tape of a positive electrode plate

See each group of examples.

### (3) Preparation of a negative electrode plate

A negative electrode material artificial graphite with a mass percentage of 96.5%, a conductive agent single-walled carbon nanotube (SWCNT) with a mass percentage of 0.1%, a conductive agent conductive carbon black (SP) with a mass percentage of 1%, a binder sodium carboxymethyl cellulose (CMC) with a mass percentage of 1%, and a binder styrene-butadiene rubber (SBR) with a mass percentage of 1.4% were made into a slurry by using a wet process. The slurry was applied on a surface of a negative electrode current collector with copper foil, and then drying (temperature: 85°C, time: 5 hours), rolling, and die cutting were carried out to obtain negative electrode plates with different sizes.

### (4) Preparation of a non-aqueous electrolyte solution

See each group of examples.

### (5) Preparation of a separator

A polyethylene separator with a thickness ranging from 7 µm to 9 µm is selected.

### (6) Preparation of a lithium-ion battery

The positive electrode plate, the separator, and the negative electrode plate that are prepared above were wound, and a termination tape of the positive electrode plate is attached at an end of the positive electrode plate (termination tapes of the positive electrode plate on both sides of the positive electrode current collector have a same area), to obtain an unfilled bare battery cell. The bare cell was placed in outer packaging foil, the prepared electrolyte solution was injected into the dried bare cell, and after processes such as vacuum packaging, standing, forming, shaping, and sorting, the lithium-ion battery required was obtained.

The batteries obtained in each group of examples and comparative examples were separately tested according to the method shown in the following test example.

### Test example

### (1) 45°C cycling test

The batteries obtained in examples and comparative examples were placed in an environment of (45±2)°C to stand for 2 to 3 hours. When the battery bodies reached (45±2)°C, the batteries were charged at a constant current of 1C, with a cut-off current of 0.05C. After being fully charged, the batteries were left aside for 5 minutes, and then discharged at a constant current of 0.7C to a cut-off voltage of 3.0 V. The highest discharge capacity for the first three cycles was recorded as an initial capacity Q. When the number of cycles reaches 400, the last discharge capacity of each battery was recorded as Qi, and batteries obtained after 400 cycles are disassembled to record whether lithium deposition occurred on an edge of each battery. Results were recorded in a table of each group.

The calculation formula used is as follows: Capacity retention rate (%) = Q₁/Q × 100%.

### (2) High-temperature storage test

The batteries obtained in examples and comparative examples were charged and discharged three times at a charge and discharge C-rate of 0.5C at room temperature, and then charged to a fully charged state at a C-rate of 0.5C, and the highest discharge capacity Q₂ and a battery thickness T₁ of the first three cycles at 0.5C for each battery were recorded. The batteries in a fully charged state were stored at a specified temperature (70°C or 85°C, for details, refer to each group of examples) for a specific time (for details, refer to each group of examples). Upon completion of storage, a battery thickness T₂ and a 0.5C discharge capacity Q₃ for each battery were recorded, then experimental data such as a thickness change rate and a capacity retention rate that are stored at a high temperature of each battery were obtained by means of calculation, and results were recorded in a table of each group.

The calculation formulas used are as follows: Capacity retention rate (%) = Q₃/Q₂ × 100%; and Thickness change rate (%) = (T₂ - T₁)/T₁ × 100%.

### (3) Thermal shock test at 130°C

The batteries obtained in examples and comparative examples were heated in a convection mode or by using a circulating hot air box at a start temperature of (25±3)°C, with a temperature change rate of (5±2)°C/min. The temperature was raised to (130±2)°C, the batteries were kept at the temperature for 60 minutes, and then the test ended. The recorded status results of the batteries were recorded in a table of each group.

In the following groups of examples, the termination tape of the positive electrode plate and/or the non-aqueous electrolyte solution are separately adjusted. These examples are merely used to illustrate exemplary combination manners of the present disclosure, and are not intended to limit a preferred combination manner. A person skilled in the art can infer good effect of other combination manners based on these combination manners.

### Example group I

This example group is used for an example of a combination of [X1+Y1].

### (1) Preparation of a termination tape of a positive electrode plate

82 parts by weight of a natural rubber, 24 parts by weight of styrene-butadiene rubber, 20 parts by weight of butyl rubber, 10 parts by weight of nitrile rubber, 28 parts by weight of terpene resin, and 16 parts by weight of antioxidant were sequentially added into 1,500 parts by weight of a mixed solvent (ethyl ester, toluene, and xylene at a mass ratio of 1:1:1), and the resulting mixture was stirred evenly at a temperature of 85°C to obtain a mixed solution. 105 parts by weight of polyisobutylene rubber and 38 parts by weight of inorganic pigment were sequentially added into the mixed solution, and the resulting mixture was stirred evenly at a temperature of 80°C to obtain a mixed solution. Then a specific part by weight of cross-linking agent vinylene carbonate was added into the mixed solution, and the resulting mixture was stirred evenly at room temperature and applied on a surface of a PET substrate, to obtain the termination tape of the positive electrode plate.

### (2) Preparation of a non-aqueous electrolyte solution

In a glove box filled with argon (moisture < 10 ppm, oxygen < 1 ppm), solvents (ethylene carbonate (EC), propylene carbonate (PC), propyl propionate (PP), and 1,1,2,3-tetrafluoroethyl-2,2,3,3-tetrafluoropropyl ether at a mass ratio of 2:1:3:2) were evenly mixed, and a lithium salt (for specific amounts and selection of the lithium salt, refer to Table 11) was slowly added into the mixed solution. The mixture was stirred evenly to obtain the non-aqueous electrolyte solution.

(3) Composition and preparation of a positive electrode plate, a negative electrode plate, and a separator, and assembly of a lithium-ion battery were performed according to the preparation example.

Numbers and technical features of each group of examples and comparative examples are shown in Table 11.

**Table I1**

| | A (cm²) | B1 (mol/L) | C (cm) | A/B1 | A/C | D (wt%) |
|---|---|---|---|---|---|---|
| Comparative Example I1 | 11 | 6 mol/L LiFSI | 8 | 1.83 | 1.38 | / |
| Comparative Example I2 | 11 | 1.7 mol/L LiFSI | 16 | 6.47 | 0.69 | / |
| Comparative Example I3 | 11 | 6 mol/L LiFSI | 8 | 1.83 | 1.38 | 0.5 |
| Comparative Example I4 | 11 | 1.7 mol/L LiFSI | 16 | 6.47 | 0.69 | 0.5 |
| Comparative Example I5 | 11 | 0.8 mol/L LiFSI | 8 | / | 1.38 | 0.5 |
| Example I1 | 11 | 1.7 mol/L LiFSI | 8 | 6.47 | 1.38 | / |
| Example I2 | 11 | 1.7 mol/L LiFSI | 8 | 6.47 | 1.38 | 0.5 |
| Example I3 | 18 | 2 mol/L LiTFSI | 11 | 9.00 | 1.64 | 1.0 |
| Example I4 | 12 | 6 mol/L LiFSI | 7 | 2.00 | 1.71 | 1.5 |
| Example I5 | 16.5 | 1 mol/L LiPF₆ | 10 | 16.50 | 1.65 | 5.0 |
| Example I6 | 19.5 | 1.5 mol/L LiFSI | 12 | 13.00 | 1.63 | 2.0 |
| Example I7 | 15 | 2.3 mol/L LiTFSI | 9 | 6.52 | 1.67 | 2.5 |
| A is an area of a termination tape of a positive electrode plate, in a unit of cm²; B1 is a content of a lithium salt in a non-aqueous electrolyte solution, in a unit of mol/L; C is a width of a positive electrode plate, in a unit of cm; and D is a content of vinylene carbonate in a non-aqueous electrolyte solution, in a unit of wt%. | | | | | | |

The batteries obtained in examples and comparative examples were separately tested according to the method in the test example, and obtained results were recorded in Table 12.

**Table 12**

| | 400 cycles in 45°C and 1C cycling | | 70°C high temperature storage for 60 hours | | Thermal shock for 60 minutes at 130°C | |
|---|---|---|---|---|---|---|
| | Capacity retention rate | Disassembly status after 400 cycles | Capacity retention rate | Thickness change rate | Ignition (number of passed) | Explosion (number of passed) |
| Comparative Example I1 | 30.1% | Lithium deposition at an edge | 28.1% | 37.1% | 0/5 | 0/5 |
| Comparative Example I2 | 31.2% | Lithium deposition at an edge | 30.6% | 33.1% | 0/5 | 115 |
| Comparative Example I3 | 32.8% | Lithium deposition at an edge | 30.8% | 34.2% | 0/5 | 0/5 |
| Comparative Example I4 | 37.1% | Lithium deposition at an edge | 33.4% | 26.5% | 2/5 | 2/5 |
| Comparative Example I5 | 28.8% | Lithium deposition at an edge | 27.5% | 35.7% | 0/5 | 0/5 |
| Example I1 | 60.0% | No lithium deposition | 48.7% | 18.2% | 4/5 | 3/5 |
| Example I2 | 70.9% | No lithium deposition | 56.7% | 10.9% | 5/5 | 5/5 |
| Example I3 | 75.8% | No lithium deposition | 52.4% | 12.4% | 5/5 | 5/5 |
| Example I4 | 68.3% | No lithium deposition | 57.2% | 13.3% | 5/5 | 5/5 |
| Example I5 | 65.4% | No lithium deposition | 61.6% | 8.6% | 5/5 | 5/5 |
| Example I6 | 70.1% | No lithium deposition | 64.2% | 9.7% | 5/5 | 5/5 |
| Example I7 | 73.3% | No lithium deposition | 61.3% | 10.2% | 5/5 | 5/5 |

It may be learned from the results in Table 12 that, it may be learned from the examples and comparative examples that when a battery is obtained by improving a lithium salt concentration in an electrolyte solution and using a termination tape of a positive electrode plate, high-temperature performance of the battery can be effectively improved, and a problem of lithium deposition at an edge of an electrode plate occurred after cycling of the battery can also be solved.

### Example group II

This example group is used for an example of a combination of [X2+Y1].

### (1) Preparation of a termination tape of a positive electrode plate

40 parts by weight of isooctyl acrylate, 3 parts by weight of butyl acrylate, 3 parts by weight of vinyl acetate, 3 parts by weight of acrylic acid, 5 parts by weight of polyisoprene rubber, 1 part by weight of pentaerythritol trimethacrylate, 1 part by weight of azobiisobutyronitrile, and 40 parts by weight of ethyl ester were mixed and stirred evenly at a temperature of 80°C to obtain a mixed solution. Then a specific part by weight of cross-linking agent vinylene carbonate was added into the mixed solution, and the resulting mixture was stirred evenly at room temperature and applied on a surface of a PET substrate, to obtain the termination tape of the positive electrode plate.

### (2) Preparation of a non-aqueous electrolyte solution

In a glove box filled with argon (moisture < 10 ppm, oxygen < 1 ppm), ethylene carbonate (EC), propylene carbonate (PC), propyl propionate (PP), and 1,1,2,3-tetrafluoroethyl-2,2,3,3-tetrafluoropropyl ether were evenly mixed at a mass ratio of 1:1:3:2, and a lithium salt was slowly added into the mixed solution. The mixture was stirred evenly to obtain the non-aqueous electrolyte solution.

(3) Composition and preparation of a positive electrode plate, a negative electrode plate, and a separator, and assembly of a lithium-ion battery were performed according to the preparation example.

Numbers and technical features of each group of examples and comparative examples are shown in Table II1.

**Table II1**

| | A (cm²) | B1 (mol/L) | C (cm) | A/B1 | A/C | D (wt%) |
|---|---|---|---|---|---|---|
| Comparative Example II1 | 10 | 6 mol/L LiFSI | 8 | 1.67 | 1.25 | / |
| Comparative Example II2 | 10 | 2 mol/L LiFSI | 13 | 5 | 0.77 | / |
| Comparative Example II3 | 10 | 6 mol/L LiFSI | 8 | 1.67 | 1.25 | 0.8 |
| Comparative Example II4 | 10 | 2 mol/L LiFSI | 13 | 5 | 0.77 | 0.8 |
| Comparative Example II5 | 10 | 0.8 mol/L LiFSI | 8 | / | 1.25 | 0.8 |
| Comparative Example II6 | 10 | 2 mol/L LiFSI | 8 | 5 | 1.25 | / |
| Example II1 | 10 | 2 mol/L LiFSI | 8 | 5 | 1.25 | 0.8 |
| Example II2 | 16.5 | 1.8 mol/L LiTFSI | 10 | 9.17 | 1.65 | 0.5 |
| Example II3 | 15 | 1.5 mol/L LiFSI | 9 | 10.00 | 1.67 | 1.0 |
| Example II4 | 12 | 1 mol/L LiPF₆ | 7 | 10.91 | 1.71 | 2.0 |
| Example II5 | 18 | 6 mol/L LiFSI | 11 | 3.00 | 1.64 | 5.0 |
| Example II6 | 19.5 | 2.3 mol/L LiTFSI | 12 | 8.48 | 1.63 | 2.5 |
| A is an area of a termination tape of a positive electrode plate, in a unit of cm²; B 1 is a content of a lithium salt in a non-aqueous electrolyte solution, in a unit of mol/L; C is a width of a positive electrode plate, in a unit of cm; and D is a content of vinylene carbonate in a non-aqueous electrolyte solution, in a unit of wt%. | | | | | | |

The batteries obtained in examples and comparative examples were separately tested according to the method in the test example. The obtained results are recorded in Table 112.

**Table 112**

| | 400 cycles in 45°C and 1C cycling | | 85°C high temperature storage for 8 hours | | Thermal shock for 60 minutes at 130°C | |
|---|---|---|---|---|---|---|
| | Capacity retention rate | Disassembly status after 400 cycles | Capacity retention rate | Thickness change rate | Ignition (number of passed) | Explosion (number of passed) |
| Comparative Example II1 | 25.1% | Lithium deposition at an edge | 44.1% | 33.1% | 0/5 | 0/5 |
| Comparative Example II2 | 32.5% | Lithium deposition at an edge | 50.1% | 28.3% | 0/5 | 115 |
| Comparative Example II3 | 28.2% | Lithium deposition at an edge | 40.3% | 29.4% | 115 | 115 |
| Comparative Example II4 | 37.4% | Lithium deposition at an edge | 53.2% | 22.5% | 2/5 | 2/5 |
| Comparative Example II5 | 26.8% | Lithium deposition at an edge | 47.9% | 30.1% | 0/5 | 0/5 |
| Comparative Example II6 | 55.6% | No lithium deposition | 58.5% | 19.4% | 3/5 | 4/5 |
| Example II1 | 68.1% | No lithium deposition | 64.4% | 10.4% | 5/5 | 5/5 |
| Example II2 | 62.8% | No lithium deposition | 62.4% | 13.1% | 5/5 | 5/5 |
| Example II3 | 64.3% | No lithium deposition | 67.7% | 11.8% | 5/5 | 5/5 |
| Example II4 | 70.1% | No lithium deposition | 61.8% | 8.6% | 5/5 | 5/5 |
| Example II5 | 66.1% | No lithium deposition | 66.2% | 9.7% | 5/5 | 5/5 |
| Example II6 | 73.3% | No lithium deposition | 72.3% | 8.3% | 5/5 | 5/5 |

It may be learned from the results in Table 112 that, it may be learned from the examples and comparative examples that when a battery is obtained by using a lithium salt in an electrolyte solution in combination with a termination tape of a positive electrode plate, high-temperature performance of the battery can be effectively improved, and a problem of lithium deposition at an edge of an electrode plate occurred after cycling of the battery can also be solved.

### Example group III

The set of examples is used for a combination of examples [X1+Y1+Y2].

### (1) Preparation of a termination tape of a positive electrode plate

82 parts by weight of a natural rubber, 24 parts by weight of styrene-butadiene rubber, 20 parts by weight of butyl rubber, 10 parts by weight of nitrile rubber, 28 parts by weight of terpene resin, and 16 parts by weight of antioxidant were sequentially added into 1,500 parts by weight of a mixed solvent (ethyl ester, toluene, and xylene at a mass ratio of 1:1:1), and the resulting mixture was stirred evenly at a temperature of 85°C to obtain a mixed solution. 105 parts by weight of polyisobutylene rubber and 38 parts by weight of inorganic pigment were sequentially added into the mixed solution, and the resulting mixture was stirred evenly at a temperature of 80°C to obtain a mixed solution. Then a specific part by weight of cross-linking agent vinylene carbonate was added into the mixed solution, and the resulting mixture was stirred evenly at room temperature and applied on a surface of a PET substrate, to obtain the termination tape of the positive electrode plate.

### (2) Preparation of a non-aqueous electrolyte solution

In an argon-filled glove box (moisture <10 ppm, oxygen <1 ppm), ethylene carbonate (EC), propylene carbonate (PC), propyl propionate (PP), and ethyl propionate (EP) were evenly mixed at a mass ratio of 2:1:3:1, and LiPF₆ accounting for 13 wt% of a total mass of the non-aqueous electrolyte solution and an additive were slowly added into the mixed solution. The mixture was stirred evenly to obtain the non-aqueous electrolyte solution.

(3) Composition and preparation of a positive electrode plate, a negative electrode plate, and a separator, and assembly of a lithium-ion battery were performed according to the preparation example.

Numbers and features of each group of examples and comparative examples are shown in Table 1111.

**Table III1**

| | A (cm²) | B2 (wt%) | C (cm) | A/B2 | A/C | D (wt%) |
|---|---|---|---|---|---|---|
| Comparative Example III1 | 12 | 30 | 8 | 0.4 | 1.5 | / |
| Comparative Example III2 | 12 | 8 | 16 | 1.5 | 0.75 | / |
| Comparative Example III3 | 12 | 30 | 8 | 0.4 | 1.5 | 0.6 |
| Comparative Example III4 | 12 | 8 | 16 | 1.5 | 0.75 | 0.6 |
| Comparative Example III5 | 12 | / | 8 | / | 1.5 | 0.6 |
| Example III1 | 12 | 8 | 8 | 1.5 | 1.5 | / |
| Example III2 | 12 | 8 | 8 | 1.5 | 1.5 | 0.6 |
| Example III3 | 16.5 | 10 | 10 | 1.65 | 1.65 | 0.5 |
| Example III4 | 12 | 7 | 7 | 1.71 | 1.71 | 1.5 |
| Example III5 | 13.5 | 5 | 8 | 2.7 | 1.69 | 5.0 |
| Example III6 | 22.5 | 16 | 14 | 1.41 | 1.61 | 2.0 |
| Example III7 | 19.5 | 30 | 12 | 0.65 | 1.63 | 3.0 |
| A is an area of a termination tape of a positive electrode plate, in a unit of cm²; B2 is a | | | | | | |
| content of fluoroethylene carbonate in a non-aqueous electrolyte solution, in a unit of wt%; C is a width of a positive electrode plate, in a unit of cm; and D is a content of vinylene carbonate in a non-aqueous electrolyte solution, in a unit of wt%. | | | | | | |

The batteries obtained in examples and comparative examples were separately tested according to the method in the test example, and obtained results were recorded in Table III2.

**Table 1112**

| | 400 cycles in 45°C and 1C cycling | | 70°C high temperature storage for 24 hours | | Thermal shock for 60 minutes at 130°C | |
|---|---|---|---|---|---|---|
| | Capacity retention rate | Disassembly status after 400 cycles | Capacity retention rate | Thickness change rate | Ignition (number of passed) | Explosion (number of passed) |
| Comparative Example III1 | 28.0% | Lithium deposition at an edge | 50.1% | 20.4% | 0/5 | 0/5 |
| Comparative Example III2 | 32.3% | Lithium deposition at an edge | 54.6% | 19.3% | 115 | 0/5 |
| Comparative Example III3 | 35.8% | Lithium deposition at an edge | 55.3% | 18.1% | 115 | 0/5 |
| Comparative Example III4 | 42.6% | Lithium deposition at an edge | 64.2% | 14.6% | 2/5 | 2/5 |
| Comparative Example III5 | 31.7% | Lithium deposition at an edge | 52.9% | 20.6% | 0/5 | 0/5 |
| Example III1 | 60.1% | No lithium deposition | 69.5% | 13.0% | 4/5 | 3/5 |
| Example III2 | 73.5% | No lithium deposition | 76.4% | 8.8% | 5/5 | 5/5 |
| Example III3 | 71.5% | No lithium deposition | 74.2% | 5.2% | 5/5 | 5/5 |
| Example III4 | 75.4% | No lithium deposition | 71.8% | 6.4% | 5/5 | 5/5 |
| Example III5 | 72.1% | No lithium deposition | 76.2% | 4.7% | 5/5 | 5/5 |
| Example III6 | 69.1% | No lithium deposition | 70.3% | 8.0% | 5/5 | 5/5 |
| Example III7 | 74.2% | No lithium deposition | 72.1% | 7.3% | 5/5 | 5/5 |

It may be learned from the results in Table III2 that, it may be learned from the examples and comparative examples that when a battery is obtained by adding fluoroethylene carbonate into an electrolyte solution and meeting a synergistic relationship with a termination tape of a positive electrode plate, high-temperature performance of a battery cell can be effectively improved, and a problem of lithium deposition at an edge of an electrode plate occurred after cycling of the battery cell can also be solved.

### Example group IV

The set of examples is used for a combination of examples [X2+Y1+Y2].

### (1) Preparation of a termination tape of a positive electrode plate

38 parts by weight of isooctyl acrylate, 3 parts by weight of butyl acrylate, 3 parts by weight of vinyl acetate, 3 parts by weight of acrylic acid, 5 parts by weight of polyisoprene rubber, 1 part by weight of pentaerythritol trimethacrylate, 1 part by weight of azobiisobutyronitrile, and 36 parts by weight of ethyl ester were mixed and stirred evenly at a temperature of 80°C to obtain a mixed solution. Then a specific part by weight of cross-linking agent vinylene carbonate was added into the mixed solution, and the resulting mixture was stirred evenly at room temperature and applied on a surface of a PET substrate, to obtain the termination tape of the positive electrode plate.

### (2) Preparation of a non-aqueous electrolyte solution

In an argon-filled glove box (moisture <10 ppm, oxygen <1 ppm), ethylene carbonate (EC), propylene carbonate (PC), propyl propionate (PP), and ethyl propionate (EP) were evenly mixed at a mass ratio of 1: 1:3:2, and LiPF₆ accounting for 13 wt% of a total mass of the non-aqueous electrolyte solution and an additive (specific amounts and selection of the additive are shown in Table 1) were slowly added into the mixed solution. The mixture was stirred evenly to obtain the non-aqueous electrolyte solution.

(3) Composition and preparation of a positive electrode plate, a negative electrode plate, and a separator, and assembly of a lithium-ion battery were performed according to the preparation example.

Numbers and features of each group of examples and comparative examples are shown in Table IV1.

**Table IV1**

| | A (cm²) | B2 (wt%) | C (cm) | A/B2 | A/C | D (wt%) |
|---|---|---|---|---|---|---|
| Comparative Example IV1 | 14.25 | 30 | 9 | 0.475 | 1.58 | / |
| Comparative Example IV2 | 14.25 | 10 | 15 | 1.425 | 0.95 | / |
| Comparative Example IV3 | 14.25 | 30 | 9 | 0.475 | 1.58 | 1.0 |
| Comparative Example IV4 | 14.25 | 10 | 15 | 1.425 | 0.95 | 1.0 |
| Comparative Example IV5 | 14.25 | / | 9 | / | 1.58 | 1.0 |
| Comparative Example IV6 | 14.25 | 10 | 9 | 1.425 | 1.58 | / |
| Example IV1 | 14.25 | 10 | 9 | 1.425 | 1.58 | 1.0 |
| Example IV2 | 12 | 5 | 7 | 2.4 | 1.71 | 1.5 |
| Example IV3 | 16 | 7 | 10 | 2.29 | 1.60 | 2.0 |
| Example IV4 | 13.5 | 15 | 8 | 0.9 | 1.69 | 3.0 |
| Example IV5 | 35 | 30 | 16 | 1.167 | 2.19 | 4.0 |
| Example IV6 | 24 | 12 | 12 | 2 | 2.00 | 5.0 |
| A is an area of a termination tape of a positive electrode plate, in a unit of cm²; B2 is a content of fluoroethylene carbonate in a non-aqueous electrolyte solution, in a unit of wt%; C is a width of a positive electrode plate, in a unit of cm; and D is a content of vinylene carbonate in a non-aqueous electrolyte solution, in a unit of wt%. | | | | | | |

The batteries obtained in examples and comparative examples were separately tested according to the method in the test example, and obtained results were recorded in Table IV2.

**Table IV2**

| | 400 cycles in 45°C and 1C cycling | | 85°C high temperature storage for 6 hours | | Thermal shock for 60 minutes at 130°C | |
|---|---|---|---|---|---|---|
| | Capacity retention rate | Disassembly status after 400 cycles | Capacity retention rate | Thickness change rate | Ignition (number of passed) | Explosion (number of passed) |
| Comparative Example IV1 | 25.2% | Lithium deposition at an edge | 45.9% | 41.2% | 0/5 | 0/5 |
| Comparative Example IV2 | 30.1% | Lithium deposition at an edge | 55.2% | 35.5% | 115 | 0/5 |
| Comparative Example IV3 | 35.8% | Lithium deposition at an edge | 50.3% | 34.3% | 2/5 | 2/5 |
| Comparative Example IV4 | 47.6% | Lithium precipitation at edge | 60.2% | 28.1% | 2/5 | 2/5 |
| Comparative Example IV5 | 26.4% | Lithium deposition at an edge | 47.9% | 40.9% | 0/5 | 0/5 |
| Comparative Example IV6 | 59.1% | No lithium deposition | 67.5% | 18.0% | 4/5 | 4/5 |
| Example IV1 | 76.1% | No lithium deposition | 75.2% | 13.8% | 5/5 | 5/5 |
| Example IV2 | 72.9% | No lithium deposition | 73.4% | 11.9% | 5/5 | 5/5 |
| Example IV3 | 74.4% | No lithium deposition | 77.3% | 10.4% | 5/5 | 5/5 |
| Example IV4 | 71.1% | No lithium deposition | 70.8% | 10.6% | 5/5 | 5/5 |
| Example IV5 | 68.1% | No lithium deposition | 69.9% | 9.0% | 5/5 | 5/5 |
| Example IV6 | 70.9% | No lithium deposition | 72.8% | 10.3% | 5/5 | 5/5 |

It may be learned from the results in Table IV2 that, it may be learned from the examples and comparative examples that when a battery is obtained by adding fluoroethylene carbonate into an electrolyte solution and meeting a synergistic relationship with a termination tape of a positive electrode plate, high-temperature performance of a battery cell can be effectively improved, and a problem of lithium deposition at an edge of an electrode plate occurred after cycling of the battery cell can also be solved.

### Example group V

The set of examples is used for a combination of examples [X1+Y1+Y3].

### (1) Preparation of a termination tape of a positive electrode plate

82 parts by weight of a natural rubber, 24 parts by weight of styrene-butadiene rubber, 20 parts by weight of butyl rubber, 10 parts by weight of nitrile rubber, 28 parts by weight of terpene resin, and 16 parts by weight of antioxidant were sequentially added into 1,500 parts by weight of a mixed solvent (ethyl ester, toluene, and xylene at a mass ratio of 1:1:1), and the resulting mixture was stirred evenly at a temperature of 85°C to obtain a mixed solution. 105 parts by weight of polyisobutylene rubber and 38 parts by weight of inorganic pigment were sequentially added into the mixed solution, and the resulting mixture was stirred evenly at a temperature of 80°C to obtain a mixed solution. Then a specific part by weight of cross-linking agent vinylene carbonate was added into the mixed solution, and the resulting mixture was stirred evenly at room temperature and applied on a surface of a PET substrate, to obtain the termination tape of the positive electrode plate.

### (2) Preparation of a non-aqueous electrolyte solution

In an argon-filled glove box (moisture <10 ppm, oxygen <1 ppm), ethylene carbonate (EC), propylene carbonate (PC), propyl propionate (PP), and ethyl propionate (EP) were evenly mixed at a mass ratio of 1:1:3:2, and LiPF₆ accounting for 13 wt% of a total mass of the non-aqueous electrolyte solution and lithium difluoro(oxalato)borate were slowly added into the mixed solution. The mixture was stirred evenly to obtain the non-aqueous electrolyte solution.

(3) Composition and preparation of a positive electrode plate, a negative electrode plate, and a separator, and assembly of a lithium-ion battery were performed according to the preparation example.

Numbers and features of each group of examples and comparative examples are shown in Table V1.

**Table V1**

| | A (cm²) | B3 (wt%) | C (cm) | A/B3 | A/C | D (wt%) |
|---|---|---|---|---|---|---|
| Comparative Example V1 | 13.5 | 3 | 8 | 4.5 | 1.69 | / |
| Comparative Example V2 | 13.5 | 0.8 | 16 | 16.88 | 0.84 | / |
| Comparative Example V3 | 13.5 | 3 | 8 | 4.5 | 1.69 | 0.8 |
| Comparative Example V4 | 13.5 | 0.8 | 16 | 16.88 | 0.84 | 0.8 |
| Comparative Example V5 | 13.5 | / | 8 | / | 1.69 | 0.8 |
| Example V1 | 13.5 | 0.8 | 8 | 16.88 | 1.69 | / |
| Example V2 | 13.5 | 0.8 | 8 | 16.88 | 1.69 | 0.8 |
| Example V3 | 18 | 1 | 11 | 18 | 1.64 | 1.5 |
| Example V4 | 16.5 | 0.1 | 10 | 165 | 1.65 | 2.0 |
| Example V5 | 21 | 0.7 | 13 | 30 | 1.62 | 1.0 |
| Example V6 | 15 | 3 | 9 | 5 | 1.67 | 3.0 |
| Example V7 | 19.5 | 0.2 | 12 | 97.5 | 1.63 | 5.0 |
| A is an area of a termination tape of a positive electrode plate, in a unit of cm²; B3 is a content of lithium difluoro(oxalato)borate in a non-aqueous electrolyte solution, in a unit of wt%; C is a width of a positive electrode plate, in a unit of cm; and D is a content of vinylene carbonate in a non-aqueous electrolyte solution, in a unit of wt%. | | | | | | |

The batteries obtained in examples and comparative examples were separately tested according to the method in the test example, and obtained results were recorded in Table V2.

**Table V2**

| | 400 cycles in 45°C and 1C cycling | | 70°C high temperature storage for 48 hours | | Thermal shock for 60 minutes at 130°C | |
|---|---|---|---|---|---|---|
| | Capacity retention rate | Disassembly status after 400 cycles | Capacity retention rate | Thickness change rate | Ignition (number of passed) | Explosion (number of passed) |
| Comparative Example V1 | 25.4% | Lithium deposition at an edge | 49.2% | 22.4% | 1/5 | 1/5 |
| Comparative Example V2 | 40.3% | Lithium deposition at an edge | 52.1% | 19.1% | 0/5 | 0/5 |
| Comparative Example V3 | 30.1% | Lithium deposition at an edge | 52.3% | 20.9% | 2/5 | 1/5 |
| Comparative Example V4 | 45.0% | Lithium precipitation at edge | 57.1% | 16.5% | 1/5 | 0/5 |
| Comparative Example V5 | 28.9% | Lithium deposition at an edge | 49.5% | 23.1% | 0/5 | 0/5 |
| Example V1 | 55.2% | No lithium deposition | 65.9% | 15.3% | 4/5 | 4/5 |
| Example V2 | 62.1% | No lithium deposition | 72.2% | 8.3% | 5/5 | 5/5 |
| Example V3 | 67.3% | No lithium deposition | 74.4% | 10.2% | 5/5 | 5/5 |
| Example V4 | 58.4% | No lithium deposition | 71.9% | 8.8% | 5/5 | 5/5 |
| Example V5 | 69.1% | No lithium deposition | 75.3% | 7.6% | 5/5 | 5/5 |
| Example V6 | 73.3% | No lithium deposition | 78.1% | 12.3% | 5/5 | 5/5 |
| Example V7 | 64.6% | No lithium deposition | 73.1% | 6.1% | 5/5 | 5/5 |

It may be learned from the results in Table V2 that, it may be learned from the examples and comparative examples that when a battery is obtained by adding lithium difluoro(oxalato)borate into an electrolyte solution and having a synergistic relationship with a termination tape of a positive electrode plate, high-temperature performance of a battery cell can be effectively improved, and a problem of lithium deposition at an edge of an electrode plate occurred after cycling of the battery cell can also be solved.

### Example group VI

The set of examples is used for a combination of examples [X2+Y1+Y4].

### (1) Preparation of a termination tape of a positive electrode plate

38 parts by weight of isooctyl acrylate, 3 parts by weight of butyl acrylate, 3 parts by weight of vinyl acetate, 3 parts by weight of acrylic acid, 5 parts by weight of polyisoprene rubber, 1 part by weight of pentaerythritol trimethacrylate, 1 part by weight of azobiisobutyronitrile, and 36 parts by weight of ethyl ester were mixed and stirred evenly at a temperature of 80°C to obtain a mixed solution. Then a specific part by weight of cross-linking agent vinylene carbonate was added into the mixed solution, and the resulting mixture was stirred evenly at room temperature and applied on a surface of a PET substrate, to obtain the termination tape of the positive electrode plate.

### (2) Preparation of a non-aqueous electrolyte solution

In an argon-filled glove box (moisture <10 ppm, oxygen <1 ppm), ethylene carbonate (EC), propylene carbonate (PC), propyl propionate (PP), and ethyl propionate (EP) were evenly mixed at a mass ratio of 1:1:3:2, and LiPF₆ accounting for 13 wt% of a total mass of the non-aqueous electrolyte solution and lithium difluorophosphate were slowly added into the mixed solution. The mixture was stirred evenly to obtain the non-aqueous electrolyte solution.

(3) Composition and preparation of a positive electrode plate, a negative electrode plate, and a separator, and assembly of a lithium-ion battery were performed according to the preparation example.

Numbers and features of each group of examples and comparative examples are shown in Table VI1.

**Table VI1**

| | A (cm²) | B4 (wt%) | C (cm) | A/B4 | A/C | D (wt%) |
|---|---|---|---|---|---|---|
| Comparative Example VI1 | 13.5 | 3 | 8 | 4.5 | 1.69 | / |
| Comparative Example VI2 | 13.5 | 0.5 | 18 | 27 | 0.75 | / |
| Comparative Example VI3 | 13.5 | 3 | 8 | 4.5 | 1.69 | 0.5 |
| Comparative Example VI4 | 13.5 | 0.5 | 18 | 27 | 0.75 | 0.5 |
| Comparative Example VI5 | 13.5 | / | 8 | / | 1.69 | 0.5 |
| Example VI1 | 13.5 | 0.5 | 8 | 27 | 1.69 | / |
| Example VI2 | 13.5 | 0.5 | 8 | 27 | 1.69 | 0.5 |
| Example VI3 | 16.5 | 1 | 10 | 16.5 | 1.65 | 1.5 |
| Example VI4 | 15 | 0.1 | 9 | 150 | 1.67 | 2.0 |
| Example VI5 | 10.5 | 0.7 | 6 | 15 | 1.75 | 1.0 |
| Example VI6 | 19.5 | 3 | 12 | 6.5 | 1.63 | 3.0 |
| Example VI7 | 22.5 | 0.2 | 14 | 112.5 | 1.61 | 5.0 |
| A is an area of a termination tape of a positive electrode plate, in a unit of cm²; B4 is a content of lithium difluorophosphate in a non-aqueous electrolyte solution, in a unit of wt%; C is a width of a positive electrode plate, in a unit of cm; and D is a content of vinylene carbonate in a non-aqueous electrolyte solution, in a unit of wt%. | | | | | | |

The batteries obtained in examples and comparative examples were separately tested according to the method in the test example, and obtained results were recorded in Table VI2.

**Table VI2**

| | 400 cycles in 45°C and 1C cycling | | 85 °C high temperature storage for 4 hours | | Thermal shock for 60 minutes at 130°C | |
|---|---|---|---|---|---|---|
| | Capacity retention rate | Disassembly status after 400 cycles | Capacity retention rate | Thickness change rate | Ignition (number of passed) | Explosion (number of passed) |
| Comparative Example VI1 | 22.6% | Lithium deposition at an edge | 38.1% | 38.1% | 0/5 | 0/5 |
| Comparative Example VI2 | 33.3% | Lithium deposition at an edge | 50.4% | 30.4% | 115 | 0/5 |
| Comparative Example VI3 | 28.1% | Lithium deposition at an edge | 42.7% | 30.3% | 115 | 0/5 |
| Comparative Example VI4 | 43.0% | Lithium deposition at an edge | 57.9% | 26.1% | 2/5 | 3/5 |
| Comparative Example VI5 | 24.8% | Lithium deposition at an edge | 48.4% | 35.9% | 0/5 | 0/5 |
| Example VI1 | 55.4% | No lithium deposition | 59.5% | 18.0% | 4/5 | 4/5 |
| Example VI2 | 65.1% | No lithium deposition | 62.2% | 10.2% | 5/5 | 5/5 |
| Example VI3 | 61.3% | No lithium deposition | 64.4% | 12.9% | 5/5 | 5/5 |
| Example VI4 | 67.4% | No lithium deposition | 66.9% | 9.8% | 5/5 | 5/5 |
| Example VI5 | 71.1% | No lithium deposition | 70.3% | 11.6% | 5/5 | 5/5 |
| Example VI6 | 65.0% | No lithium deposition | 69.4% | 8.3% | 5/5 | 5/5 |
| Example VI7 | 70.3% | No lithium deposition | 72.1% | 9.1% | 5/5 | 5/5 |

It may be learned from the results in Table VI2 that, it may be learned from the examples and comparative examples that when a battery is obtained by adding lithium difluorophosphate into an electrolyte solution and having a synergistic relationship with a termination tape of a positive electrode plate, high-temperature performance of a battery cell can be effectively improved, and a problem of lithium deposition at an edge of an electrode plate occurred after cycling of the battery cell can also be solved.

### Example group VII

The set of examples is used for a combination of examples [X1+Y1+Y56].

### (1) Preparation of a termination tape of a positive electrode plate

82 parts by weight of a natural rubber, 24 parts by weight of styrene-butadiene rubber, 20 parts by weight of butyl rubber, 10 parts by weight of nitrile rubber, 28 parts by weight of terpene resin, and 16 parts by weight of antioxidant were sequentially added into 1,500 parts by weight of a mixed solvent (ethyl ester, toluene, and xylene at a mass ratio of 1:1:1), and the resulting mixture was stirred evenly at a temperature of 85°C to obtain a mixed solution. 105 parts by weight of polyisobutylene rubber and 38 parts by weight of inorganic pigment were sequentially added into the mixed solution, and the resulting mixture was stirred evenly at a temperature of 80°C to obtain a mixed solution. Then a specific part by weight of cross-linking agent vinylene carbonate was added into the mixed solution, and the resulting mixture was stirred evenly at room temperature and applied on a surface of a PET substrate, to obtain the termination tape of the positive electrode plate.

### (2) Preparation of a non-aqueous electrolyte solution

In an argon-filled glove box (moisture <10 ppm, oxygen <1 ppm), ethylene carbonate (EC), propylene carbonate (PC), propyl propionate (PP), and ethyl propionate (EP) were evenly mixed at a mass ratio of 2:1:2:1, and LiPF₆ accounting for 13 wt% of a total mass of the non-aqueous electrolyte solution and an additive were slowly added into the mixed solution. The mixture was stirred evenly to obtain the non-aqueous electrolyte solution.

Numbers and features of each group of examples and comparative examples are shown in Table VII1.

**Table VII1**

| | A (cm²) | B56 (wt%) | C (cm) | A/B56 | A/C | D (wt%) |
|---|---|---|---|---|---|---|
| Comparative Example VII1 | 10 | 3% DENE+3% glycerol trinitrile | 6 | 1.67 | 1.67 | / |
| Comparative Example VII2 | 10 | 2% DENE | 14 | 5 | 0.71 | / |
| Comparative Example VII3 | 10 | 3% DENE+3% glycerol trinitrile | 6 | 1.67 | 1.67 | 1.0 |
| Comparative Example VII4 | 10 | 2% DENE | 14 | 5 | 0.71 | 1.0 |
| Comparative Example VII5 | 10 | / | 6 | / | 1.67 | 1.0 |
| Example VII1 | 10 | 2% DENE | 6 | 5 | 1.67 | / |
| Example VII2 | 10 | 2% DENE | 6 | 5 | 1.67 | 1.0 |
| Example VII3 | 16.5 | 0.5% glycerol trinitrile | 10 | 33 | 1.65 | 0.5 |
| Example VII4 | 15 | 3% DENE | 9 | 5 | 1.67 | 2.0 |
| Example VII5 | 13.5 | 2% glycerol trinitrile | 8 | 6.75 | 1.69 | 5.0 |
| Example VII6 | 19.5 | 3% glycerol trinitrile | 12 | 6.5 | 1.63 | 1.5 |
| Example VII7 | 22.5 | 2.5% DENE | 14 | 9 | 1.61 | 2.5 |
| A is an area of a termination tape of a positive electrode plate, in a unit of cm²; B56 is a content of 1,2-bis(cyanoethoxy)ethane (DENE) and/or 1,2,3-tris(2-cyanoethoxy)propane (glycerol trinitrile) in a non-aqueous electrolyte solution, in a unit of wt%; C is a width of a positive electrode plate, in a unit of cm; and D is a content of vinylene carbonate in a non-aqueous electrolyte solution, in a unit of wt%. | | | | | | |

The batteries obtained in examples and comparative examples were separately tested according to the method in the test example, and obtained results were recorded in Table VII2.

**Table VII2**

| | 400 cycles in 45°C and 1C cycling | | 70°C high temperature storage for 72 hours | | Thermal shock for 60 minutes at 130°C | |
|---|---|---|---|---|---|---|
| | Capacity retention rate | Disassembly status after 400 cycles | Capacity retention rate | Thickness change rate | Ignition (number of passed) | Explosion (number of passed) |
| Comparative Example VII1 | 29.1% | Lithium deposition at an edge | 29.1% | 55.0% | 0/5 | 0/5 |
| Comparative Example VII2 | 32.4% | Lithium precipitation at edge | 31.5% | 47.2% | 115 | 115 |
| Comparative Example VII3 | 35.2% | Lithium precipitation at edge | 35.7% | 45.1% | 115 | 2/5 |
| Comparative Example VII4 | 42.8% | Lithium deposition at an edge | 38.3% | 37.5% | 2/5 | 2/5 |
| Comparative Example VII5 | 31.3% | Lithium deposition at an edge | 30.5% | 50.7% | 0/5 | 115 |
| Example VII1 | 60.5% | No lithium deposition | 58.1% | 18.2% | 3/5 | 4/5 |
| Example VII2 | 74.5% | No lithium deposition | 67.3% | 12.6% | 5/5 | 5/5 |
| Example VII3 | 68.3% | No lithium deposition | 62.5% | 15.2% | 5/5 | 5/5 |
| Example VII4 | 76.6% | No lithium deposition | 71.3% | 10.4% | 5/5 | 5/5 |
| Example VII5 | 73.2% | No lithium deposition | 72.7% | 10.2% | 5/5 | 5/5 |
| Example VII6 | 79.1% | No lithium deposition | 76.9% | 8.5% | 5/5 | 5/5 |
| Example VII7 | 75.3% | No lithium deposition | 70.2% | 9.0% | 5/5 | 5/5 |

It may be learned from the results in Table 2 that, it may be learned from the examples and comparative examples that when a battery is prepared by adding 1,2-bis(cyanoethoxy)ethane and/or 1,2,3-tris(2-cyanoethoxy)propane into an electrolyte solution and meeting a synergistic relationship with a termination tape of a positive electrode plate, high-temperature performance of the battery can be effectively improved, and a problem of lithium deposition at an edge of an electrode plate occurred after cycling of the battery can also be solved.

### Example group VIII

The set of examples is used for a combination of examples [X1+Y1+Y56].

### (1) Preparation of a termination tape of a positive electrode plate

40 parts by weight of isooctyl acrylate, 3 parts by weight of butyl acrylate, 3 parts by weight of vinyl acetate, 3 parts by weight of acrylic acid, 5 parts by weight of polyisoprene rubber, 1 part by weight of pentaerythritol trimethacrylate, 1 part by weight of azobiisobutyronitrile, and 40 parts by weight of ethyl ester were mixed and stirred evenly at a temperature of 80°C to obtain a mixed solution. Then a specific part by weight of cross-linking agent vinylene carbonate was added into the mixed solution, and the resulting mixture was stirred evenly at room temperature and applied on a surface of a PET substrate, to obtain the termination tape of the positive electrode plate.

### (2) Preparation of a non-aqueous electrolyte solution

In an argon-filled glove box (moisture <10 ppm, oxygen <1 ppm), ethylene carbonate (EC), propylene carbonate (PC), propyl propionate (PP), and ethyl propionate (EP) were evenly mixed at a mass ratio of 2:1:3:2, and LiPF₆ accounting for 13 wt% of a total mass of the non-aqueous electrolyte solution and an additive were slowly added into the mixed solution. The mixture was stirred evenly to obtain the non-aqueous electrolyte solution.

(3) Composition and preparation of a positive electrode plate, a negative electrode plate, and a separator, and assembly of a lithium-ion battery were performed according to the preparation example.

Numbers and features of each group of examples and comparative examples are shown in Table VIII1.

**Table VIII1**

| | A (cm²) | B56 (wt%) | C (cm) | A/B56 | A/C | D (wt%) |
|---|---|---|---|---|---|---|
| Comparative Example VIII1 | 9.5 | 3% DENE+3% glycerol trinitrile | 6 | 1.58 | 1.58 | / |
| Comparative Example VIII2 | 9.5 | 3% DENE | 12 | 3.17 | 0.79 | / |
| Comparative Example VIII3 | 9.5 | 3% DENE+3% glycerol trinitrile | 6 | 1.58 | 1.58 | 1.5 |
| Comparative Example VIII4 | 9.5 | 3% DENE | 12 | 3.17 | 0.79 | 1.5 |
| Comparative Example VIII5 | 9.5 | / | 6 | / | 1.58 | 1.5 |
| Comparative Example VIII6 | 9.5 | 3% DENE | 6 | 3.17 | 1.58 | / |
| Example VIII1 | 9.5 | 3% DENE | 6 | 3.17 | 1.58 | 1.5 |
| Example VIII2 | 13.5 | 0.5% glycerol trinitrile | 8 | 27 | 1.69 | 0.5 |
| Example VIII3 | 16.5 | 1.5% DENE | 10 | 11 | 1.65 | 1.0 |
| Example VIII4 | 15 | 2% glycerol trinitrile | 9 | 7.5 | 1.67 | 5.0 |
| Example VIII5 | 22.5 | 3% glycerol trinitrile | 14 | 7.5 | 1.61 | 2.0 |
| Example VIII6 | 19.5 | 2.5% DENE | 12 | 7.8 | 1.63 | 3.0 |
| A is an area of a termination tape of a positive electrode plate, in a unit of cm²; B56 is a content of 1,2-bis(cyanoethoxy)ethane (DENE) and/or 1,2,3-tris(2-cyanoethoxy)propane (glycerol trinitrile) in a non-aqueous electrolyte solution, in a unit of wt%; C is a width of a positive electrode plate, in a unit of cm; and D is a content of vinylene carbonate in a non-aqueous electrolyte solution, in a unit of wt%. | | | | | | |

The batteries obtained in examples and comparative examples were separately tested according to the method in the test example, and obtained results were recorded in Table VIII2.

**Table VIII2**

| | 400 cycles in 45°C and 1C cycling | | 85°C high temperature storage for 10 hours | | Thermal shock for 60 minutes at 130°C | |
|---|---|---|---|---|---|---|
| | Capacity retention rate | Disassembly status after 400 cycles | Capacity retention rate | Thickness change rate | Ignition (number of passed) | Explosion (number of passed) |
| Comparative Example VIII1 | 28.2% | Lithium deposition at an edge | 26.1% | 53.1% | 0/5 | 0/5 |
| Comparative Example VIII2 | 35.1% | Lithium deposition at an edge | 30.2% | 45.8% | 0/5 | 0/5 |
| Comparative Example VIII3 | 33.7% | Lithium deposition at an edge | 30.3% | 43.2% | 2/5 | 2/5 |
| Comparative Example VIII4 | 45.3% | Lithium deposition at an edge | 33.7% | 35.2% | 115 | 115 |
| Comparative Example VIII5 | 32.1% | Lithium deposition at an edge | 27.5% | 50.3% | 0/5 | 0/5 |
| Comparative Example VIII6 | 60.4% | No lithium deposition | 47.1% | 19.2% | 4/5 | 4/5 |
| Example VIII1 | 72.7% | No lithium deposition | 57.3% | 15.1% | 5/5 | 5/5 |
| Example VIII2 | 75.2% | No lithium deposition | 54.5% | 13.5% | 5/5 | 5/5 |
| Example VIII3 | 77.1% | No lithium deposition | 59.1% | 12.1% | 5/5 | 5/5 |
| Example VIII4 | 70.3% | No lithium deposition | 61.5% | 10.2% | 5/5 | 5/5 |
| Example VIII5 | 71.7% | No lithium deposition | 56.9% | 14.5% | 5/5 | 5/5 |
| Example VIII6 | 69.5% | No lithium deposition | 63.9% | 9.3% | 5/5 | 5/5 |

It may be learned from the results in Table 2 that, it may be learned from the examples and comparative examples that when a battery is prepared by adding 1,2-bis(cyanoethoxy)ethane and/or 1,2,3-tris(2-cyanoethoxy)propane into an electrolyte solution and having a synergistic relationship with a termination tape of a positive electrode plate, high-temperature performance of the battery can be effectively improved, and a problem of lithium deposition at an edge of an electrode plate occurred after cycling of the battery can also be solved.

A battery in the present disclosure is a high-voltage battery and has excellent high-temperature performance. A size of a termination tape of a positive electrode plate is controlled, and a material of an adhesive layer is further controlled in a preferred solution, so that based on synergistic effect between the termination tape of the positive electrode plate and a non-aqueous electrolyte solution, high-temperature performance of a battery cell of a prepared battery can be effectively improved, and a problem of lithium deposition at an edge of an electrode plate occurred after cycling of the battery cell can also be solved. This avoids problems, such as thickness failure in high-temperature storage and lithium deposition in high-temperature cycling of the battery cell caused by warping and deformation of the termination tape of the positive electrode plate, the adhesive layer in the termination tape of the positive electrode plate being easily soluble in a non-aqueous electrolyte solution, and the non-aqueous electrolyte solution being easily oxidized, reduced and decomposed at positive and negative interfaces, occurred when the battery is used in a high-temperature environment.

The foregoing illustrates implementations of the present application. However, the present application is not limited to the foregoing implementations. Any modifications, equivalent replacements, and improvements made without departing from the principle of the present application shall fall within the protection scope of the present application.

## Claims

1. A battery, wherein the battery comprises a positive electrode plate, a negative electrode plate, a non-aqueous electrolyte solution, and a separator; the non-aqueous electrolyte solution comprises a non-aqueous organic solvent, a lithium salt, and an optional electrolyte additive; and a termination tape of the positive electrode plate is disposed at a paste coating tail of the positive electrode plate; and
an area of a termination tape of the positive electrode plate is A cm², and a width of the positive electrode plate is C cm, wherein a ratio of A to C is in a range of 1 to 3.

2. The battery according to claim 1, wherein the area A of the termination tape of the positive electrode plate ranges from 3 cm² and 120 cm²; and
preferably, the width C of the positive electrode plate ranges from 1 cm to 120 cm.

3. The battery according to claim 1 or 2, wherein the termination tape comprises a substrate and a termination adhesive layer coated on a surface of the substrate, and the termination adhesive layer is a rubber termination adhesive layer or a (meth)acrylic acid termination adhesive layer.

4. The battery according to claim 3, wherein the rubber termination adhesive layer comprises a cross-linked modified rubber;
preferably, the cross-linked modified rubber is obtained by cross-linking modification of a first base under an action of a first cross-linking agent, and the first base is selected from at least one of a natural rubber, styrene-butadiene rubber, polyisobutylene rubber, butyl rubber, or nitrile rubber; and
preferably, the first cross-linking agent comprises vinylene carbonate; and using a total weight of the cross-linked modified rubber as a reference, a content of vinylene carbonate ranges from 0.5 wt% to 5 wt%.

5. The battery according to claim 3, wherein the (meth)acrylic acid termination adhesive layer comprises cross-linked modified (meth)acrylic acid and/or cross-linked modified (meth)acrylate;
preferably, the (meth)acrylic acid termination adhesive layer is obtained by cross-linking modification of a second base under an action of a second cross-linking agent, and the second base is selected from at least one of methacrylic acid, acrylic acid, methacrylate, or acrylate; and
preferably, the second cross-linking agent comprises vinylene carbonate; and using a total weight of the cross-linked modified (meth)acrylic acid and/or cross-linked modified (meth)acrylate as a reference, a content of vinylene carbonate ranges from 0.5 wt% to 5 wt%.

6. The battery according to any one of claims 1 to 5, wherein using a total weight of the non-aqueous electrolyte solution as a reference, a content of the lithium salt is B1 mol/L, and a ratio of A to B1 is in a range of 2-20; and
preferably, the content B1 of the lithium salt ranges from 1 mol/L to 6 mol/L, and more preferably, ranges from 1.5 mol/L to 3 mol/L.

7. The battery according to any one of claims 1 to 6, wherein the electrolyte additive comprises lithium difluoro(oxalato)borate;
preferably, using a total weight of the non-aqueous electrolyte solution as a reference, a content of lithium difluoro(oxalato)borate is B3 wt%, and a ratio of A to B3 is in a range of 5-200; and
preferably, the content B3 of lithium difluoro(oxalato)borate ranges from 0.1 wt% to 3 wt%, and more preferably, ranges from 0.2 wt% to 1 wt%.

8. The battery according to any one of claims 1 to 7, wherein the electrolyte additive comprises fluoroethylene carbonate;
preferably, using a total weight of the non-aqueous electrolyte solution as a reference, a content of fluoroethylene carbonate is B2 wt%, and a ratio of A to B2 is in a range of 0.5-5; and
preferably, the content B2 of fluoroethylene carbonate ranges from 5 wt% to 30 wt%, and more preferably, ranges from 5 wt% to 10wt%.

9. The battery according to any one of claims 1 to 8, wherein the electrolyte additive comprises lithium difluorophosphate;
preferably, using a total weight of the non-aqueous electrolyte solution as a reference, a content of lithium difluorophosphate is B4 wt%, and a ratio of A to B4 is in a range of 5-200; and
preferably, the content B4 of lithium difluorophosphate ranges from 0.1 wt% to 3 wt%, and more preferably, ranges from 0.2 wt% to 1 wt%.

10. The battery according to any one of claims 1 to 9, wherein the electrolyte additive comprises 1,2-bis(cyanoethoxy)ethane and/or 1,2,3-tris(2-cyanoethoxy)propane;
preferably, using a total weight of the non-aqueous electrolyte solution as a reference, a content of 1,2-bis(cyanoethoxy)ethane and/or 1,2,3-tris(2-cyanoethoxy)propane is B56 wt%, and a ratio of A to B56 is in a range of 2-40; and
preferably, the content B56 of 1,2-bis(cyanoethoxy)ethane and/or 1,2,3-tris(2-cyanoethoxy)propane ranges from 0.5 wt% to 3 wt%, and more preferably, ranges from 1 wt% to 2 wt%.

11. The battery according to any one of claims 1 to 10, wherein the electrolyte additive comprises one or a combination of two or more of lithium difluoro(oxalato)borate, fluoroethylene carbonate, lithium difluorophosphate, 1,2-bis(cyanoethoxy)ethane, or 1,2,3-tris(2-cyanoethoxy)propane;
preferably, the electrolyte additive at least comprises lithium difluoro(oxalato)borate;
preferably, the electrolyte additive at least comprises lithium difluorophosphate;
preferably, the electrolyte additive at least comprises fluoroethylene carbonate; and
preferably, the electrolyte additive at least comprises 1,2-bis(cyanoethoxy)ethane and/or 1,2,3-tris(2-cyanoethoxy)propane.

12. The battery according to any one of claims 1 to 11, wherein the electrolyte additive further comprises at least one of 1,3-propanesulfonic acid lactone, 1-propene 1,3-sultone, ethylene sulphite, ethylene sulfate, lithium bis(oxalate)borate, lithium difluoro oxalate phosphate, and vinyl ethylene carbonate; and
preferably, using a total weight of the non-aqueous electrolyte solution as a reference, a total content of the electrolyte additive ranges from 0 wt% to 10 wt%.

13. The battery according to any one of claims 1 to 12, wherein the non-aqueous organic solvent is selected from at least one of carbonate, carboxylic acid ester, or fluorinated ether, wherein the carbonate is selected from one or more combinations of ethylene carbonate, propylene carbonate, dimethyl carbonate, ethyl methyl carbonate, diethyl carbonate, or methyl propyl carbonate; the carboxylic acid ester is selected from one or more combinations of ethyl propionate or propyl propionate; and the fluorinated ether is selected from 1,1,2,3-tetrafluoroethyl-2,2,3,3-tetrafluoropropyl ether.

14. The battery according to any one of claims 1 to 13, wherein the battery comprises at least one of the following combinations (1) to (8):
(1) using a total weight of the non-aqueous electrolyte solution as a reference, a content of the lithium salt is B 1 mol/L, a ratio of A to B 1 is in a range of 2-20, and a termination adhesive layer of the termination tape of the positive electrode plate is a rubber termination adhesive layer;
(2) using a total weight of the non-aqueous electrolyte solution as a reference, a content of the lithium salt is B 1 mol/L, a ratio of A to B 1 is in a range of 2-20, and a termination adhesive layer of the termination tape of the positive electrode plate is a (meth)acrylic acid termination adhesive layer;
(3) the electrolyte additive comprises fluoroethylene carbonate, using a total weight of the non-aqueous electrolyte solution as a reference, a content of fluoroethylene carbonate is B2 wt%, a ratio of A to B2 is in a range of 0.5-5, and a termination adhesive layer of the termination tape of the positive electrode plate is a (meth)acrylic acid termination adhesive layer;
(4) the electrolyte additive comprises fluoroethylene carbonate, using a total weight of the non-aqueous electrolyte solution as a reference, a content of fluoroethylene carbonate is B2 wt%, a ratio of A to B2 is in a range of 0.5-5, and a termination adhesive layer of the termination tape of the positive electrode plate is a rubber termination adhesive layer;
(5) the electrolyte additive comprises lithium difluoro(oxalato)borate, using a total weight of the non-aqueous electrolyte solution as a reference, a content of lithium difluoro(oxalato)borate is B3 wt%, a ratio of A to B3 is in a range of 5-200, and a termination adhesive layer of the termination tape of the positive electrode plate is a rubber termination adhesive layer;
(6) the electrolyte additive comprises lithium difluorophosphate, using a total weight of the non-aqueous electrolyte solution as a reference, a content of lithium difluorophosphate is B4 wt%, a ratio of A to B4 is in a range of 5-200, and a termination adhesive layer of the termination tape of the positive electrode plate is a (meth)acrylic acid termination adhesive layer;
(7) the electrolyte additive comprises 1,2-bis(cyanoethoxy)ethane and/or 1,2,3-tris(2-cyanoethoxy)propane, using a total weight of the non-aqueous electrolyte solution as a reference, a content of 1,2-bis(cyanoethoxy)ethane and/or 1,2,3-tris(2-cyanoethoxy)propane is B56 wt%, a ratio of A to B56 is in a range of 2-40, and a termination adhesive layer of the termination tape of the positive electrode plate is a (meth)acrylic acid termination adhesive layer; or
(8) the electrolyte additive comprises 1,2-bis(cyanoethoxy)ethane and/or 1,2,3-tris(2-cyanoethoxy)propane, using a total weight of the non-aqueous electrolyte solution as a reference, a content of 1,2-bis(cyanoethoxy)ethane and/or 1,2,3-tris(2-cyanoethoxy)propane is B56 wt%, a ratio of A to B56 is in a range of 2-40, and a termination adhesive layer of the termination tape of the positive electrode plate is a rubber termination adhesive layer.

15. The battery according to any one of claims 1 to 14, wherein a charge cut-off voltage of the battery is 4.45 V or above.
